# EUROPÄISCHE PATENTSCHRIFT

(11) **EP 1 307 521 B1**
(45) Veröffentlichungstag und Bekanntmachung des Hinweises auf die Patenterteilung: **14.09.2005**
(21) Anmeldenummer: 01958033.1
(22) Anmeldetag: 28.07.2001
(51) Int. Cl.: C09J 133/00

(54) **WÄSSRIGES KLEBSTOFFSYSTEM, VERFAHREN ZU DESSEN HERSTELLUNG UND DESSEN VERWENDUNG**
AQUEOUS ADHESIVE SYSTEM, METHOD FOR THE PRODUCTION AND USE THEREOF
SYSTEME DE COLLE AQUEUX, PROCEDE DE FABRICATION ET UTILISATION

(30) Priorität: 09.08.2000 DE 10038934
(43) Veröffentlichungstag der Anmeldung: 07.05.2003
(73) Patentinhaber: Henkel Kommanditgesellschaft auf Aktien, 40589 Düsseldorf (DE)
(72) Erfinder: BACHON, Thomas, 40597 Düsseldorf (DE); WINDHÖVEL, Udo, Frank, 40789 Monheim (DE); TAMCKE, Thomas, 40593 Düsseldorf (DE); URBATH, Hartmut, 42389 Wuppertal (DE); KOSTYRA, Sebastian, 40789 Monheim (DE); RAKER, Katja, 40239 Düsseldorf (DE)
(74) Vertreter: Endres, Helmut
(86) Internationale Anmeldenummer: PCT/EP2001/008765
(87) Internationale Veröffentlichungsnummer: WO 2002/012412

(56) Entgegenhaltungen:
- EP-A- 0 782 977
- EP-A- 1 118 628
- DE-A- 3 302 439
- US-A- 5 229 438

## Beschreibung

Die vorliegende Erfindung betrifft ein mindestens zwei getrennte Komponenten A und B aufweisendes Klebstoffsystem, wobei das Klebstoffsystem
a) als Komponente A eine wäßrige Dispersion eines durch Polyaddition oder durch Polymerisation eines mindestens eine olefinisch ungesättigte Doppelbindung aufweisenden Monomeren, oder eines Gemischs aus zwei oder mehr solcher Monomeren erhältlichen Polymeren oder eines Gemischs aus zwei oder mehr solcher Polymerer und
b) als Komponente B eine Dispersion eines Trockenmittels in einer bei 23 °C flüssigen Ölphase enthält, wobei die Ölphase mindestens 0,1 Gew.-% einer in der Ölphase löslichen, bei 23 °C flüssigen Verbindung, die mindestens eine kovalente Einfach-, Doppel- oder Dreifachbindung zwischen einem C-Atom und einem Heteroatom aufweist, oder ein Gemisch aus zwei oder mehr solcher Verbindungen, umfaßt,
ein Verfahren zur Herstellung eines Klebstoffs aus den Komponenten A und B sowie die Verwendung der Komponente B zur Herstellung von Bindemitteln oder Klebstoffen, Beschichtungsstoffen und Dichtstoffen.

Wäßrige Klebstoffdispersionen werden in vielen Bereichen der Technik zum Verkleben von Substraten miteinander eingesetzt. Vorteilhaft wirkt sich der Einsatz solcher wäßrigen Klebstoffdispersionen insbesondere dann aus, wenn bei einer Verklebung einerseits keine lösemittelhaltigen Dämpfe in die Umgebung gelangen sollen andererseits jedoch eine problemlose Verdampfung des in der wäßrigen Klebstoffdispersion befindlichen Wassers möglich ist. Problematisch ist der Einsatz wäßriger Klebstoffdispersionen jedoch insbesondere dann, wenn entweder die Verklebungsbedingungen eine Verdampfung des Wassers entweder erschweren oder sogar unmöglich machen oder das zu verklebende Substrat gegenüber Wasser empfindlich ist, so daß die Verwendung einer wäßrigen Klebstoffdispersion eine Beschädigung des Substrats verursacht. Weiterhin sind wäßrige Klebstoffe in der Regel auch dann nicht zum Einsatz geeignet, wenn damit gerechnet werden muß, daß die Verklebung zumindest zeitweise einer Umgebung mit extrem hoher Luftfeuchtigkeit ausgesetzt ist und auch unter diesen Bedingungen nichts von ihrer Klebkraft verlieren darf oder die Verklebung sogar zeitweise oder dauernd direktem Kontakt mit Wasser ausgesetzt ist.

In den letztgenannten Fällen wurden daher in der Vergangenheit wasserfreie Klebstoffe eingesetzt, die entweder durch Verdampfen eines leicht flüchtigen Lösemittels oder durch Reaktion zweier miteinander reaktiver Komponenten ihre Klebkraft entfalten. Bei den erstgenannten Klebstoffen ergibt sich der Nachteil, daß Lösemittel in die Umgebung emittiert werden, was insbesondere bei einer Anwendung der Klebstoffe in Innenräumen aufgrund einer eventuell von den Lösemitteln ausgehenden Gesundheitsgefährdung und einer mit der Lösemittelemission einhergehenden Geruchsbelästigung unerwünscht ist. Bei den letztgenannten Reaktivklebstoffen wirkt sich nachteilig aus, daß derartige Reaktivklebstoffe in der Regel gesundheitsgefährdende Isocyanate, Epoxide, Polyamine und -amide enthalten. Der Umgang mit derartigen Isocyanaten, Epoxiden, Polyaminen und amiden begegnet beim Anwender jedoch häufig Vorbehalten.

Es bestand also ein Bedarf nach Klebstoffen auf Wasserbasis, die auch unter solchen Bedingungen eingesetzt werden können, bei denen eine Verdampfung des Wassers erschwert oder im wesentlichen unmöglich ist. Weiterhin bestand ein Bedarf nach Klebstoffen auf Wasserbasis, die auch in Verbindung mit wasserempfindlichen Substraten eingesetzt werden können. An derartige Klebstoffe wird jedoch die Anforderung gestellt, daß sie eine ausreichende Verarbeitungszeit (Topfzeit) aufweisen, nach dem Ende der Topfzeit möglichst schnell belastbar sind und darüber hinaus auch in Innenräumen anwendbar sind, wobei besonders auf eine geringe Geruchsbelästigung Wert gelegt wird. Derartige Klebstoffe sollten jedoch darüber hinaus noch eine ausreichende Beständigkeit gegenüber Wasser aufweisen, damit ein Einsatz in Umgebungen mit hoher Luftfeuchtigkeit möglich ist und darüber hinaus ein zumindest kurzfristiger Kontakt mit Wasser die Beständigkeit der Verklebung nicht mindert. Derartige Eigenschaftsprofile sind beispielsweise für Klebstoffe gefordert, die zur Verklebung von Laminat oder Parkett auf entsprechendem Untergrund in Innenräumen eingesetzt werden.

Die EP-A 0 782 977 betrifft eine Zubereitung mit der eine Substratoberfläche wasserfest oder dampffest ausgerüstet werden kann. Die Druckschrift beschreibt zwei Komponenten, wobei eine der Komponenten einen wäßrigen Latex eines natürlichen oder synthetischen Gummis und die zweite Komponente eine Dispersion eines Vulkanisierungsmittels und einer hygroskopischen Verbindung in einer Ölphase darstellt. Als geeignete Ölphase werden Kohlenwasserstofföle genannt, wobei insbesondere Mischungen von Kohlenwasserstoffölen, beispielsweise eine Mischung von aromatischen und aliphatischen Verbindungen, bevorzugt sind. Die Druckschrift beschreibt außerdem, daß zur Einstellung der Fließeigenschaften synthetische, flüssige Weichmacher wie Phthalate oder Adipate in der Ölphase enthalten sein können. Nachteilig wirkt sich am in dieser Druckschrift beschriebenen System aus, daß sowohl das Bindemittel in der wäßrigen Ölphase als auch das Vulkanisierungsmittels zu einer nicht unerheblichen Geruchsbelästigung führen können. Darüber hinaus neigt die beschriebene Suspension einer hygroskopischen Verbindung in den genannten Kohlenwasserstoffölen zur Phasenseparierung, wodurch der Anwender vor Einsatz der beschriebenen Zubereitung zunächst einen Dispersionsschritt durchführen muß. Weiterhin zeigen die beschriebenen Zubereitungen eine für Klebstoffanwendungen gegebenenfalls unbefriedigende Härtungscharakteristik, da zwischen dem Ende des Zeitraums während dem die Zubereitung verarbeitbar ist (Topfzeit) und einer tatsächlichen Belastbarkeit einer mittels der beschriebenen Zubereitung durchgeführten Oberflächenbeschichtung eine längere Zeitspanne liegt. Schließlich wird in der Druckschrift nichts über die Anwendungsmöglichkeit der darin beschriebenen Zusammensetzungen als Klebstoff ausgesagt.

Insbesondere dann, wenn Klebstoffe zur Verklebung von Bodenbelägen eingesetzt werden, wird häufig eine gute Isolierung des Bodenbelags gegenüber den Bodenbelag tragenden Untergrund gefordert. Eine derartige Isolierung bezieht sich zum einen auf den Wärmeübergang zwischen Boden und Bodenbelag und zum anderen auf die Dämpfungseigenschaften des Bodenbelags, insbesondere im Hinblick auf Trittschall. Die aus dem Stand der Technik bekannten Klebstoffe weisen in dieser Hinsicht unbefriedigende Ergebnisse auf, da eine Wärmeisolierung bzw. eine Trittschalldämmung oder beides nicht oder zumindest nicht in ausreichendem Maße beim Einsatz der aus dem Stand der Technik bekannten Klebstoffe erzielbar ist.

Die Erfindung lag daher die Aufgabe zugrunde, Klebstoffe auf Wasserbasis zur Verfügung zustellen, die auch unter den oben genannten Bedingungen einsetzbar sind und die Nachteile des Standes der Technik nicht aufweisen.

Gelöst wird die erfindungsgemäße Aufgabe durch ein mindestens zwei Komponenten A und B aufweisendes Klebstoffsystem, wobei das Klebstoffsystem als Komponente A eine wäßrige Dispersion eines Polyurethans oder eines Polymerisats und als Komponente B eine Dispersion eines Trockenmittels in einer Ölphase mit erhöhter Polarität eingesetzt wird.

Gegenstand der vorliegenden Erfindung ist daher ein mindestens zwei getrennte Komponenten A und B aufweisendes Klebstoffsystem, wobei das Klebstoffsystem
a) als Komponente A eine wäßrige Dispersion eines durch Polyaddition oder durch Polymerisation eines mindestens eine olefinisch ungesättigte Doppelbindung aufweisenden Monomeren, oder eines Gemischs aus zwei oder mehr solcher Monomeren erhältlichen Polymeren oder eines Gemischs aus zwei oder mehr solcher Polymerer (Polymerdispersion) und
b) als Komponente B eine Dispersion eines Trockenmittels in einer bei 23 °C flüssigen Ölphase enthält, wobei die Ölphase mindestens 0,1 Gew.-% einer in der Ölphase löslichen, bei 23 °C flüssigen Verbindung, die mindestens eine kovalente Einfach-, Doppel- oder Dreifachbindung zwischen einem C-Atom und einem Heteroatom aufweist, oder ein Gemisch aus zwei oder mehr solcher Verbindungen,
umfaßt.

Unter einem "Klebstoffsystem" wird im Rahmen der vorliegenden Erfindung ein System verstanden, dessen getrennt vorliegende Komponenten vom Anwender vor der Durchführung einer Verklebung vermischt werden, wodurch sich erst der tatsächlich im Sinne der vorliegenden Erfindung wirksame Klebstoff ergibt. Es ist dabei im Rahmen der vorliegenden Erfindung vorgesehen, daß ein erfindungsgemäßes Klebstoffsystem mindestens zwei getrennte Komponenten A und B umfaßt.

Es ist jedoch ebensogut möglich, daß ein Klebstoffsystem gemäß der vorliegenden Erfindung mehr als zwei Komponenten, beispielsweise 3, 4, 5 oder eine noch höhere Zahl an Komponenten umfaßt. Die im Rahmen des erfindungsgemäßen Klebstoffsystems vorliegenden Komponenten können in einzelnen, getrennt handhabbaren Behältern vorliegen, wobei der eigentliche Klebstoff durch zusammenführen und Vermischen des Inhalts der getrennten Behälter hergestellt wird.

Die vorliegende Erfindung umfaßt jedoch auch solche Klebstoffsysteme, bei denen die einzelnen Komponenten zwar physikalisch voneinander getrennt vorliegen, sich jedoch in einem einzigen Behälter befinden. Derartige Systeme sind beispielsweise Kartuschensysteme mit zwei oder mehr Kammern. Bei solchen Systemen können eine oder mehrere Kammern jeweils eine Komponente und eine oder mehrere weitere Kammern jeweils eine weitere Komponente aufnehmen. Zur Herstellung des Klebstoffs aus den einzelnen Komponenten des Klebstoffsystems werden dann die entsprechenden Kammern gleichzeitig entleert und der Kammerinhalt, beispielsweise über einen Statikmischer, vor dem Austritt auf die eigentliche Anwendungsfläche, zum Klebstoff vermischt. Ebenso vom erfindungsgemäßen Klebstoffsystem umfaßt sind solche Systeme, bei denen die den Klebstoff ergebenden Komponenten in getrennten Kammern innerhalb eines Behälter vorliegen, wobei eine Verbindung der Kammern beispielsweise durch Zerstören der zwischen den Kammern liegenden Trennwände durch äußeren Druck und die anschließende Vermischung der Kammerinhalte beispielsweise durch Walken des Behälters erfolgt.

Weiterhin umfaßt der Begriff "Klebstoffsysteme" im Rahmen der vorliegenden Erfindung solche Systeme, bei denen die Komponenten A und B beispielsweise im Sinne eines 1K-Systems vorliegen, jedoch durch Verkapselung einer der Komponenten, insbesondere durch Verkapselung der Komponente B, voneinander getrennt sind. Hierzu bieten sich übliche, zur Mikroverkapselung geeignete Verfahren, beispielsweise die Sprühtrocknung und weitere, dem Fachmann bekannte Verfahren, an.

Als Komponente A wird im Rahmen der vorliegenden Erfindung beispielsweise eine wäßrige Dispersion eines durch Polymerisation eines mindestens eine olefinisch ungesättigte Doppelbindung aufweisenden Monomeren oder eines Gemischs aus zwei oder mehr solcher Monomeren erhältlichen Polymeren oder eines Gemischs aus zwei oder mehr solcher Polymerer eingesetzt. Derartige wäßrige Dispersionen werden im Rahmen des vorliegenden Textes auch als Polymerdispersionen bezeichnet. Zum Einsatz als Komponente A eignen sich dabei Polymerdispersionen, die durch Dispersion eines beispielsweise in Pulverform vorliegenden Polymeren oder eines Gemischs aus zwei oder mehr solcher Polymerer in Wasser erhältlich sind. Im Rahmen einer bevorzugten Ausführungsform der vorliegenden Erfindung werden jedoch wäßrige Dispersion eingesetzt, die das Resultat einer Suspensions- oder Emulsionspolymerisation sind. Es ist im Rahmen der vorliegenden Erfindung jedoch möglich, daß solchen Polymerdispersionen noch weitere Polymere, entweder in Form von wäßrigen Dispersionen oder als pulverförmige Polymere zugegeben wurden. Als Komponente A einsetzbare Dispersionen können nach üblichen Herstellungsverfahren für Polymerdispersionen hergestellt werden, wobei solche Herstellungsverfahren dem Fachmann bekannt sind.

Zur Herstellung der im Rahmen der vorliegenden Erfindung als Komponente A einsetzbaren Polymerdispersionen eignen sich beispielsweise Monomere mit mindestens einer olefinisch ungesättigten Doppelbindung (olefinisch ungesättigte Monomere), die einer Suspensions- oder Emulsionspolymerisation zugänglich sind. Geeignete Polymere zur Herstellung der als Komponente A einsetzbaren wäßrigen Dispersionen sind beispielsweise Vinylester-Polymere, deren monomerer Grundbaustein ein Vinylester einer linearen oder verzweigten Carbonsäure mit etwa 2 bis etwa 44, beispielsweise etwa 3 bis etwa 15 C-Atomen darstellt. Als Monomere für diese homo- oder copolymeren Polyvinylester kommen Vinylformiat, Vinylacetat, Vinylpropionat, Vinylisobutyrat, Vinylpivalat, Vinyl-2-ethylhexanoat, Vinylester von gesättigten verzweigten Monocarbonsäuren mit 9 bis etwa 15 C-Atomen im Säurerest, Vinylester von längerkettigen gesättigten oder ungesättigten Fettsäuren wie Vinyllaurat, Vinylstearat oder Vinylester der Benzoesäure und substituierter Derivate der Benzoesäure wie Vinyl-p-tert-butylbenzoat in Frage. Die genannten Vinylester können jeweils einzeln oder als Gemische aus zwei oder mehr der genannten Vinylester im Polyvinylester vorliegen. Der Anteil solcher Vinylester im gesamten in der als Komponente A eingesetzten wäßrigen Dispersion vorliegenden Polymeren beträgt im Rahmen einer bevorzugten Ausführungsform der Erfindung mindestens etwa 50 Gew.-%, beispielsweise mindestens etwa 75 Gew.-%. Im Rahmen einer weiteren bevorzugten Ausführungsform der vorliegenden Erfindung wird als olefinisch ungesättigte Monomeres Vinylacetat eingesetzt.

Im Rahmen einer weiteren bevorzugten Ausführungsform der vorliegenden Erfindung können in der Polymerdispersion auch Polymere vorliegen, die neben einem der obengenannten Vinylester oder einem Gemisch aus zwei oder mehr der obengenannten Vinylester noch weitere Comonomere aufweisen. Weitere ethylenisch ungesättigte Monomere, die mit den obengenannten Vinylestern copolymerisiert sein können sind beispielsweise Acrylsäure, Methacrylsäure sowie deren Ester mit primären oder sekundären gesättigten einwertigen Alkoholen mit 1 bis etwa 28 C-Atomen wie Methanol, Ethanol, Propanol, Butanol, 2-Ethylhexylalkohol, cycloaliphatischen Alkoholen wie Cyclohexanol, Hydroxymethylcyclohexan oder Hydroxyethylcyclohexan. Ebenfalls geeignet sind die Ester der oben genannten, ethylenisch ungesättigten Säuren mit längerkettigen Fettalkoholen. Ebenfalls als Comonomere geeignet sind ethylenisch ungesättigte Dicarbonsäuren wie Maleinsäure, Fumarsäure, Itaconsäure oder Citraconsäure sowie deren Mono- oder Diester mit gesättigten einwertigen aliphatischen Alkoholen mit 1 bis etwa 28 C-Atomen. Der Anteil solcher Comonomeren an den in der Polymerdispersion vorliegenden Polymeren kann bis zu etwa 25 Gew.-% betragen, beispielsweise etwa 0,1 bis etwa 15 Gew.-%.

Ebenfalls als Comonomere geeignet sind einfache ethylenisch ungesättigte Kohlenwasserstoffe wie Ethylen oder α-Olefine mit etwa 3 bis etwa 28 C-Atomen, beispielsweise Propylen, Butylen, Styrol, Vinyltoluol, Vinylxylol sowie halogenierte ungesättigte aliphatische Kohlenwasserstoffe wie Vinylchlorid, Vinylfluorid, Vinylidenchlorid, Vinylidenfluorid und dergleichen. Derartige Comonomere können einen Anteil am im Rahmen der Polymerdispersionen eingesetzten Polymeren von bis zu etwa 50 Gew.-% oder darunter, beispielsweise etwa 0,5 bis etwa 25 Gew.-% aufweisen.

Ebenfalls als Comonomere einsetzbar sind beispielsweise mehrfach ethylenisch ungesättigte Monomere. Beispiele für solche Monomeren sind Butadien Diallylphthalate, Diallylmaleinat, Triallylcyanurat, Tetraallyloxyethan, Divinylbenzol, Butandiol-1,4-dimethacrylat, Triethylenglykoldimethacrylat, Divinyladipat, Allylacrylat, Allylmethacrylat, Vinylcrotonat, Methylenbisacrylamid, Hexandioldiacrylat, Pentaerythritdiacrylat oder Trimethylolpropantriacrylat oder Gemische aus zwei oder mehr davon. Der Anteil solcher Comonomeren an den in den Polymerdispersionen vorliegenden, durch Emulsionspolymerisation hergestellten Polymeren beträgt bis zu etwa 10 Gew.-%, beispielsweise etwa 0,01 bis etwa 5 Gew.-%.

Weiterhin als Comonomere geeignet sind ethylenisch ungesättigte Verbindungen mit N-funktionellen Gruppen. Hierzu zählen beispielsweise Acrylamid, Methacrylamid, Allylcarbamat, Acrylnitril, N-Methylolacrylamid, N-Methylolmethacrylamid, N-Methylolallylcarbamat sowie die N-Methylolester, -alkylether oder Mannichbasen des N-Methylolacrylamids oder N-Methylolmethacrylamids oder N-Methylolallylcarbamats, Acrylamidoglykolsäure, Acrylamidomethoxyssigsäuremethylester, N-(2,2-Dimethoxy-1-hydroxyethyl)acrylamid, N-Dimethylaminopropylacrylamid, N-Dimethylaminopropylmethacrylamid, N-Methylacrylamid, N-Methylmethacrylamid, N-Butylacrylamid, N-Butylmethacrylamid, N-Cyclohexylacrylamid, N-Cyclohexylmethacrylamid, N-Dodecylacrylamid, N-Dodecylmethacrylamid, Ethylimidazolidonmethacrylat, N-Vinylformamid, N-Vinylpyrrolidon und dergleichen.

Ebenfalls im Rahmen der vorliegenden Erfindung zum Einsatz als Komponente A geeignete Polymerdispersionen enthalten Polymerisate oder Copolymerisate des Styrols oder eines seiner Derivate, beispielsweise des α-Methylstyrols. Geeignete Polymerisate weisen einen Styrolanteil von mehr als 30 Gew.-%, beispielsweise mehr als 50 Gew.-% oder mehr als 80 Gew.-% der gesamten im Polymerisat vorliegenden monomeren Bausteine auf. Geeignete Comonomere sind beispielsweise Acrylate und Methacrylate mit 1 bis etwa 12 C-Atomen in der Alkoholkomponente, beispielsweise mit zwei bis etwa 8 C-Atomen. Weitere geeignete Comonomere, die in einem entsprechenden Styrol-Copolymerisat einzeln oder als Gemisch aus zwei oder mehr davon vorliegen können sind beispielsweise Vinylester, Maleinsäureester, Ethylen, Acrylamid, Acrylsäure, Butadien oder Acrylnitril.

Weitere im Rahmen der vorliegenden Erfindung zur Herstellung der erfindungsgemäßen Polymerdispersionen geeignete organische Polymere entstammen der Gruppe der StyrolButadien-Kautschuke (SBR). Solche Kautschuke werden durch Copolymerisation von Styrol und Butadien hergestellt und enthalten die beiden Monomeren in der Regel in einem Gewichtsverhältnis von etwa 23,5 zu 76,5 oder etwa 40 zu 60. Die SBR werden üblicherweise durch Emulsionspolymerisation in Wasser hergestellt.

Eine weitere geeignete Gruppe von Polymeren stellen die Polyethylenhomo- und - copolymere dar. Eine radikalische Polymerisation von Ethylen wird beispielsweise im Rahmen der Hochdruckpolymerisation zu LDPE bei Drücken von etwa 1.400 bis 3.500 bar unter Temperaturen von 150 bis 350 °C durchgeführt. Die Reaktion wird dabei durch Sauerstoff oder Peroxide gestartet. Als Comonomere eignen sich lineare oder verzweigte α,β-ungesättigte Olefine.

Eine weitere Gruppe von geeigneten Polymeren stellen die Polyacrylsäureester oder die Polymethacrylsäureester oder Copolymere aus Polyacrylsäureestern und Polymethacrylsäureestern dar. Gegebenenfalls können die genannten Polymere noch geringe Anteile (bis zu etwa 10 %) an freien Acrylsäure- oder Methacrylsäuregruppen aufweisen.

Ebenfalls als Polymere in Komponente A geeignet sind Polyurethane, wie sie durch Polyaddition von Polyisocyanaten mit entsprechenden, gegenüber Isocyanatgruppen mindestens difunktionellen Gruppen, erhältlich sind.

Polyurethane sind beispielsweise erhältlich durch Umsetzung von
i) Polyisocyanaten mit
ii) Polyolen und
iii) Gegebenenfalls gegenüber Isocyanaten ein- oder mehrwertigen Verbindungen, die primäre und/oder sekundäre Aminogruppen und gegebenenfalls weitere funktionelle Gruppen aufweisen und
iv) Gegebenenfalls Verbindungen mit mindestens einer gegenüber Isocyanaten reaktionsfähigen Gruppe und mindestens einer durch Basen- oder Säurezugabe oder durch Quaternisierung ionisierbaren Gruppe.

Geeignete Polyurethane können beispielsweise in Gegenwart eines Emulgators dispergierbar sein, sie können jedoch auch in Wasser im wesentlichen selbstdispergierbar sein.

Unter "in Wasser im wesentlichen selbstdispergierbaren Polyurethanen" werden im erfindungsgemäßen Sinne Polyurethane verstanden, die durch Zusatz lediglich geringer Mengen oder sogar ganz ohne Zusatz von Dispergierhilfen in Wasser dispergierbar sind. Derartige Polyurethane erfordern höchstens einen Zusatz von Dispergierhilfen in einer Größenordnung von etwa 5 Gew.-%, bevorzugt weniger als 3 Gew.-% und insbesondere bevorzugt weniger als 1 Gew.-% bezogen auf die Trockenmasse der Dispersion und insbesondere bezogen auf die Masse der Bindemittel in der Dispersion.

Unter Bindemitteln oder polymeren Bindemitteln werden im erfindungsgemäßen Sinne diejenigen polymeren Bestandteile der Polyurethane verstanden, die am Aufbau der trockenen Beschichtung oder Verklebung beteiligt sind und der Beschichtung oder Verklebung mechanische Stabilität verleihen.

Organische Lösemittel mit einem Siedepunkt von mehr als 100 °C (z.B. N,N-Dimethylformamid (DMF), N,N-Dimehtylacetamid (DMAc) oder N-Methyl-Pyrrolidon (NMP) können in den Polyurethandispersionen in untergeordneten Mengen vorhanden sein, beispielsweise in einer Menge von maximal etwa 15 Gew.-%, bevorzugt weniger als 10 Gew.-% und besonders bevorzugt weniger als 8 Gew.-%, bezogen auf die gesamte Dispersion.

Als Komponente i) zur Herstellung der erfindungsgemäßen Polyurethane kommen die üblicherweise in der Polyurethanchemie eingesetzten Polyisocyanate in Betracht.

Insbesondere zu nennen sind Diisocyanate X(NCO)₂, wobei X für einen aliphatischen Kohlenwasserstoffrest mit vier bis zwölf Kohlenstoffatomen, einen cycloaliphatischen oder aromatischen Kohlenwasserstoffrest mit sechs bis fünfzehn Kohlenstoffatomen oder einen araliphatischen Kohlenwasserstoffrest mit sieben bis fünfzehn Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,3,5-trimethyl-5-isoeyanatomethylcyclohexan (IPDI), 2,2-Bis-(4-isocyanatocyclohexyl)-propan, Trimethylhexandiisocyanat, 1,4-Diisocyanatobenzol, 2,4-diisocyanatotoluol, 2,6-Diisocyanatotoluol, 4,4'-Diisocyanato-diphenylmethan, Tetramethylxylylendiisocyanat (TMXDI), 2,4'-Diisocyanato-diphenylmethan, p-Xylylendiisocyanat, die isomeren des Bis-(4-isocyanatocyclohexyl)methans, wie das trans/trans-, das cis/cis- und das cis/trans-Isomere sowie aus diesen Verbindungen bestehende Gemische.

Als Gemische dieser Isocyanate sind besonders die Gemische der jeweiligen Strukturisomeren von Diisocyanatotoluol und Diisocyanatodiphenylmethan von Bedeutung, insbesondere das Gemisch aus 80 mol-% 2,4-Diisocyanatotoluol und 20 mol-% 2,6-Diisocyanatotoluol geeignet. Weiterhin sind die Gemische von aromatischen Isocyanaten, wie 2,4-Diisocyanatotoluol und/oder 2,6-Diisocyanatotoluol mit aliphatischen oder cycloaliphatischen Isocyanaten, wie Hexamethylendiisocyanat oder IPDI besonders vorteilhaft, wobei das bevorzugte Mischungsverhältnis der aliphatischen zu den aromatischen Isocyanaten etwa 4 : 1 bis 1 : 4 beträgt.

Um Polyurethane mit einem gewissen Verzweigungs- oder Vernetzungsgrad herzustellen, können z.B. drei- und/oder vierwertige Isocyanate eingesetzt werden. Derartige Isocyanate werden z.B. erhalten, indem man zweiwertige Isocyanate derart miteinander umsetzt, daß ein Teil ihrer Isocyanatgruppen zu Allophanat-, Biuret- oder Isocyanuratgruppen derivatisiert wird. Handelsübliche Verbindungen sind beispielsweise das Isocyanurat oder das Biuret des Hexamethylendiisocyanats.

Weitere geeignete höherfunktionelle Polyisocyanate sind zum Beispiel Urethangruppen aufweisende Polyisocyanate auf Basis von 2,4- und/oder 2,6-Diisocyanatotoluol, IPDI oder Tetramethylendiisocyanat einerseits und niedermolekularen Polyhydroxyverbindungen wie Trimethylolpropan andererseits.

Im Hinblick auf gute Filmbildung und Elastizität kommen als Komponente ii) beispielsweise höhermolekulare Polyole, bevorzugt Diole, in Betracht, die ein Molekulargewicht von beispielsweise etwa 500 bis 5.000, oder etwa 1.000 bis etwa 3.000 g/mol, haben.

Bei den Polyolen der Komponente ii) handelt es sich beispielsweise um Polyesterpolyole, die z.B. aus Ullmanns Enzyklopädie der technischen Chemie, 4. Aufl., Bd. 19, S. 62-65, bekannt sind. Bevorzugt werden Polyesterpolyole eingesetzt, die durch Umsetzung von zweiwertigen Alkoholen mit mehrwertigen, bevorzugt zweiwertigen Polycarbonsäuren erhalten werden. Die Polycarbonsäuren können aliphatisch, cycloaliphatisch, araliphatisch, aromatisch oder heterocyclisch sein und gegebenenfalls z.B. durch Halogenatome substituiert und/oder ungesättigt sein. Als Beispiele hierfür seien genannt Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure und/oder dimere Fettsäuren. Die genannten Polycarbonsäuren können entweder einzeln als ausschließliche Säurekomponente oder im Gemisch untereinander zum Aufbau der Komponente i) eingesetzt werden. Bevorzugt sind die Carbonsäuren der allgemeinen Formel HOOC-(CH₂)_{y}-COOH, wobei y eine Zahl von 1 bis 20, bevorzugt eine gerade Zahl von 2 bis 20, ist, z.B. Bernsteinsäure, Adipinsäure, Dodecandicarbonsäure und Sebacinsäure. Anstelle der freien Polycarbonsäuren können auch die entsprechenden Polycarbonsäureanhydride oder entsprechenden Polycarbonsäureester von niederen Alkoholen oder deren Gemische zur Herstellung der Polyesterpolyole verwendet werden.

Als mehrwertige Alkohole zur Reaktion mit der Polycarbonsäurekomponente zum Aufbau der Komponente i) kommen z.B. Ethylenglycol, Propan-1,2-diol, Propan-1,3-diol, Butan-1,3-diol, Buten-1,4-diol, Butin-1,4-diol, Pentan-1,5-diol, Hexan-1,6-diol, Neopentylglykol, Bis-(hydroxymethyl)cyclohexane, wie 1,4-Bis(hydroxymethyl)cyclohexan, 2-Methylpropan-1,3-diol, Methylpentandiole, ferner Diethylenglykol, Triethylenglykol, Tetraethylenglykol, Polyethylenglycol, Dipropylenglykol, Polypropylenglykole, Dibutylenglykol und Polybutylenglykol in Betracht. Bevorzugt sind Neopentylglykol und Alkohole der allgemeinen Formel HO-(CH₂)ₓ-OH, wobei x eine Zahl von 1 bis 20, bevorzugt eine gerade Zahl von 2 bis 20, ist. Beispiele hierfür sind Ethylenglycol, Butan-1,4-diol, Hexan-1,6-diol, Octan-1,8-diol und Dodecan-1,12-diol.

Ebenfalls geeignet sind Polyetherdiole, bevorzugt Polyoxyethylenalkohole mit einer Molmasse von wenigstens etwa 150, bevorzugt wenigstens etwa 200, die hydrophile Abschnitte in den Polyester integrieren und gegebenenfalls für Selbstdispergierbarkeit des Polyesters oder des daraus hergestellten Polyurethans sorgen oder zumindest die Dispergierbarkeit erleichtern.

Ferner kommen als Komponente ii) auch Polycarbonatdiole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind als Komponente ii) auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Beispiele für geeignete Lactone sind ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Auch niedermolekulare Polyesterdiole oder Polyetherdiole können als Starter zur Herstellung der Lactonpolymerisate eingesetzt werden. Anstelle der Polymerisate von Lactonen können auch die entsprechenden chemisch äquivalenten Polykondensate der den Lactonen entsprechenden Hydroxycarbonsäuren eingesetzt werden.

Die Polyesterpolyole können auch unter Zuhilfenahme untergeordneter Mengen an mono- und/oder höherfunktionellen Monomeren aufgebaut werden.

Daneben kommen als Komponente ii) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Wasser, Alkohole oder Amine, z.B. Ethylenglycol, Propan-1,2-diol, Propan-1,3-dio, 1,2-Bis(4-hydroxydiphenyl)-propan oder Anilin, erhältlich.

Bei der Verwendung geeigneter Polyether mit Polyoxyethyleneinheiten mit einem Molekulargewicht von wenigstens etwa 150, bevorzugt wenigstens etwa 200 zur Herstellung der Polyurethane lassen sich in Wasser selbstdispergierbare Polyurethane herstellen, die ohne Verwendung weiterer hydrophiler Struktureinheiten im Polyurethan auskommen.

Sowohl zur Herstellung der Polyesterpolyole als auch zur Herstellung der Polyetherpolyole können Alkohole mit einer Funktionalität von mehr als zwei in untergeordneten Mengen eingesetzt werden. Insbesondere sind dies Verbindungen wie beispielsweise Trimethylolpropan, Pentaerythrit, Glycerin, Zucker, wie beispielsweise Glucose, oligomerisierte Polyole wie beispielsweise di- oder trimere Ether von Trimethylolpropan, Glycerin oder Pentaerythrit, teilveresterte polyfunktionelle Alkohole der oben beschriebenen Form, wie beispielsweise teilverestertes Trimethylolpropan, teilverestertes Glycerin, teilveresterter Pentaerythrit, teilverestertes Polyglyzerin und dergleichen, wobei zur Veresterung vorzugsweise monofunktionelle aliphatische Carbonsäuren benutzt werden. Gegebenenfalls können die Hydroxylgruppen der Polyole durch Umsetzung mit Alkylenoxiden verethert sein. Die vorstehenden Verbindungen sind ebenfalls als Starterkomponente zum Aufbau der Polyetherpolyole geeignet.

Vorzugsweise werden die Polyolverbindungen mit einer Funktionalität > 2 nur in untergeordneten Mengen zum Aufbau der Polyesterpolyole bzw. Polyetherpolyole herangezogen.

Ebenfalls als Komponente ii) geeignet sind Polyhydroxyolefine, bevorzugt solche mit zwei endständigen Hydroxylgruppen, z.B. α,ω-Dihydroxypolybutadien, α,ω-Dihydroxypolymethacrylester oder α,ω-Dihydroxypolyacrylester.

Die als Komponente ii) einsetzbar aufgezählten Polyole können auch als Gemische in beliebigen Verhältnissen eingesetzt werden.

Die Härte und das Elastizitätsmodul der Polyurethane läßt sich noch erhöhen, wenn weitere als Polyole noch niedermolekulare Di- oder Polyole, eingesetzt werden.

Als weitere Polyole werden vor allem die oben genannten kurzkettigen Alkandiole eingesetzt, wobei Neopentylglykol und die unverzweigten Diole mit 2 bis 12 C-Atomen, wie beispielweise Ethylenglycol, 1,4-Butandiol, 1,5-Pentandiol oder 1,6-Hexandiol bevorzugt werden.

Die zum Aufbau der Polyurethandispersionen beschriebenen Komponenten können auch als Gemische im Sinne der Erfindung eingesetzt werden.

Als Komponente iii) können beispielsweise Kettenverlängerungsmittel oder zur Einführung von Verzweigungen geeignete, mehr als zweiwertige Verbindungen eingesetzt werden, die mindestens eine primäre oder sekundäre oder, insofern mehr als eine Aminogruppe pro Molekül vorhanden ist, auch primäre und sekundäre Aminogruppen gleichzeitig aufweisen können.

Neben den Aminogruppen können die Verbindungen der Komponente iii) noch weitere funktionelle Gruppen, insbesondere Isocyanaten gegenüber reaktive Gruppen, aufweisen. Hierzu zählen insbesondere die Hydroxylgruppe oder die Mercaptogruppe.

Zu den im Sinne der Erfindung als Komponente iii) einsetzbaren Verbindungen zählen beispielsweise Monoaminoalkohole mit einer aliphatisch gebundenen Hydroxylgruppe, wie Ethanolamin, N-Methyl-ethanolamin, N-Ethyl-ethanolamin, N-Butyl-ethanolamin, N-Cyclohexyl-ethanolamin, N-tert.-Butylethanolamin, Leucinol, Isoleucinol, Valinol, Prolinol, Hydroxyethylanilin, 2-(Hydroxymethyl)-piperidin, 3-(Hydroxymethyl)-piperidin, 2-(2-hydroxyethyl)-piperidin, 2-Amino-2-phenylethanol, 2-Amino-1-phenylethanol, Ephedrin, p-Hydroxyephedrin, Norephedrin, Adrenalin, Noradrenalin, Serin, Isoserin, Phenylserin, 1,2-Diphenyl-2-amino-ethanol, 3-Amino-1-propanol, 2-Amino-1-propanol, 2-Amino-2-methyl-1-propanol, Isopropanolamin, N-Ethyl-isopropanolamin, 2-Amino-3-phenylpropanol, 4-Amino-1-butanol, 2-Amino-1-butanol, 2-Aminoisobutanol, Neopentanolamin, 2-Amino-1-pentaol, 5-Amino-1-pentanol, 2-Ethyl-2-butyl-5-aminopentanol, 6-Amino-1-hexanol, 2-Amino-1-hexanol, 2-(2-Aminoethoxy)-ethanol, 3-(Aminomethyl)-3,5,5-trimethylcyclohexanol, 2-Aminobenzylalkohol, 3-Aminobenzylalkohol, 3-Amino-5-methylbenzylalkohol, 2-Amino-3-methylbenzylalkohl.

Wenn der Einsatz von Komponente iii) beispielsweise der Erzeugung von Kettenverzweigungen dienen soll, so lassen sich z.B. Monoaminopolyole mit zwei aliphatisch gebundenen Hydroxylgruppen, wie 1-Amino-2,3-propandiol, 2-Amino-1,3-propandiol, 2-Amino-2-methyl-1,3-propandiol, 2-Amino-2-ethyl-1,3-propandiol, 2-Amino-1-phenyl-1,3-propandiol, Diethanolamin, Diisopropanolamin, 3-(2-Hydroxyethylamino)propanol und N-(3-Hydroxypropyl)-3-hydroxy-2,2-dimethyl-1-aminogruppen einsetzen.

Ebenfalls möglich ist der Einsatz von Polyaminen als Komponente iii). Hierzu zählen beispielsweise Verbindungen wie Hydrazin, Ethylendiamin, 1,2- und 1,3-Porpylendiamin, Butylendiamine, Pentamethylendiamine, Hexamethylendiamine wie beispielsweise das 1,6-Hexamethylendiamin, Alkylhexamethylendiamine wie beispielsweise das 2,4-Dimethylhexamethylendiamin, allgemein Alkylendiamine mit bis zu etwa 44 C-Atomen, wobei auch cyclisch oder polycyclische Alkylendiamine eingesetzt werden können wie sie z.B. aus den Dimerisierungsprodukten ungesättigter Fettsäuren in bekannter Weise gewonnen werden können. Ebenfalls einsetzbar, aber nicht bevorzugt, sind aromatische Diamine wie beispielsweise 1,2-Phenylendiamin, 1,3-Phenylendiamin oder 1,4-Phenylendiamin. Ferner können im Sinne der Erfindung höhere Amine, wie z.B. Diethylentriamin, Aminomethyldiaminooctan-1,8 und Triethylentetramin eingesetzt werden.

Neben den Komponenten i), ii) und iii) können bei der Herstellung von Polyurethane als Komponente iv) Verbindungen mit mindestens einer gegenüber Isocyanaten reaktionsfähigen Gruppe und mindestens einer durch Basen- und Säurezugabe oder durch Quaternisierung ionisierbaren Gruppe oder einer schon durch eine solche Reaktion ionisierten Gruppe eingebaut. Im folgenden Text werden Begriffe "anionische Gruppen" und "kationische Gruppen" sowohl für die durch Säuren- oder Basenzugabe oder durch Quaternisierung ionisierten Gruppen als auch für die freien Säuren oder freien Basen synonym gebraucht, insofern keine anderslautenden Angaben gemacht sind.

Der Anteil der Komponenten mit anionischen oder kationischen Gruppen an der Gesamtmenge der Komponenten wird im allgemeinen so bemessen, daß die Molmenge der anionischen oder kationischen Gruppen, bezogen auf die Gewichtsmenge aller eingesetzten Komponenten, 30 bis 1.000, bevorzugt 50 bis 600 und besonders bevorzugt 80 bis 500 mmol/kg beträgt.

Als Komponente iv) weden vor allem anionische Gruppen tragende Verbindungen, wie Sulfonat-, Carboxylat- und Phosphonatgruppen tragende Verbindungen in das Polyurethan eingebaut. Die anionischen Gruppen werden entweder in Form der freien Säure oder aber bevorzugt in Form ihrer Alkalimetall- oder Ammoniumgruppen, insbesondere protonierte tertiäre Aminogruppen oder quartäre Ammoniumgruppen, besonders geeignet sind.

Als Monomere mit anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind die Hydroxyalkylcarbonsäuren, vor allem diejenigen mit 3 bis 10 Kohlenstoffatomen. Besonders bevorzugt ist die Dimethylolpropionsäure (DMPA).

Als kationische Gruppen tragende Komponente iv) sind vor allem Verbindungen mit tertiären Aminogruppen von besonderer praktischer Bedeutung, beispielsweise Tris(hydroxyalkyl)-amine, N,N'-Bis(hydroxyalkyl)-alkylamine, N-Hydroxyalkyldialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus einem bis sechs Kohlenstoffatomen bestehen. Weiterhin kommen tertiäre, Stickstoffatome aufweisende Polyether mit vorzugsweise zwei endständigen Hydroxygruppen, wie sie z.B. durch Alkoxylierung von zwei an Aminstickstoff gebundene Wasserstoffatome aufweisenden Aminen, z.B. Methylamin, Anilin oder N,N'-Dimethylhydrazin in an sich üblicher Weise zugänglich sind, in Betracht. Derartige Polyether weisen im allgemeinen ein zwischen 500 und 6.000 g/mol liegendes Molekulargewicht auf.

Diese tertiären Amine werden entweder mit Säuren, bevorzugt starken Mineralsäuren, wie Phosphorsäure, Schwefelsäure, Halogenwasserstoffsäuren, oder mit starken organischen Säuren, wie beispielsweise Ameisensäure oder Essigsäure, oder durch Umsetzung mit geeigneten Quaternisierungsmitteln, wie C₁₋₁₆-Alkylhalogeniden, z.B. Alkylbromiden oder - chloriden, in dies Ammoniumsalze überführt.

Die genannten Polymeren können im Rahmen der vorliegenden Erfindung in der erfindungsgemäßen Polymerdispersion sowohl einzeln als auch im Gemisch aus zwei oder mehr davon, vorliegen.

In einer bevorzugten Ausführungsform der Erfindung wird als organisches Polymeres ein Copolymeres von Vinylacetat und Ethylen (EVA-Copolymeres) eingesetzt. In einer weiteren bevorzugten Ausführungsform der Erfindung enthält die Polymerdispersion Polyvinylacetat oder Polyacrylat, insbesondere Polybutylacrylat oder ein Gemisch aus Polyvinylacetat und Polyacrylat.

Im Rahmen einer bevorzugten Ausführungsform der vorliegenden Erfindung werden als Komponente A Polymerdispersionen eingesetzt, die mindestens eines der obengenannten Polymere mit einem Molekulargewicht (M_{w}) von mindestens etwa 50.000 aufweisen.

Im Rahmen der vorliegenden Erfindung geeignete Dispersionen weisen beispielsweise Copolymere von Vinylacetat, Ethylen und Vinylversatat auf. Zur Herstellung derartiger Copolymere werden beispielsweise etwa 50 bis etwa 75 Gew.-% Vinylacetat, etwa 5 bis etwa 13 Gew.-% Ethylen und etwa 5 bis etwa 30 Gew.-% Vinylversatat copolymerisiert. Ebenso geeignet sind Copolymere von Styrol und Butylacrylat. Zur Herstellung dieser Copolymere werden beispielsweise etwa 25 bis etwa 75 Gew.-% Styrol und etwa 25 bis etwa 75 Gew.-% Butylacrylat copolymerisiert. Weiterhin geeignet sind Copolymere von Styrol und Butadien. Zur Herstellung dieser Copolymere werden beispielsweise etwa 25 bis etwa 75 Gew.-% Styrol und etwa 25 bis etwa 75 Gew.-% Butadien copolymerisiert, wobei dabei insbesondere diejenigen Copolymeren mit einer Glasübergangstemperatur T_{g} von mindestens etwa 15 oder mindestens etwa 20 °C, beispielsweise mindestens etwa 25 °C bevorzugt sind. Die Festkörpergehalte der erfindungsgemäß einsetzbaren Dispersionen betragen etwa 45 bis etwa 70 Gew.-%. Besonders bevorzugt ist der Einsatz einer Dispersion eines Copolymeren von Vinylacetat, Ethylen und Vinylversatat,

Eine als Komponente A einsetzbare Polymerdispersion enthält die genannten Polymeren in einer Menge von mindestens etwa 30 Gew.-%. Im Rahmen einer bevorzugten Ausführungsform der vorliegenden Erfindung beträgt der Anteil an solchen Polymeren mindestens etwa 45 oder mindestens etwa 50 Gew.-%. Der Gehalt an solchen Polymeren kann jedoch auch darüber liegen, beispielsweise bei mindestens etwa 55 Gew.-% oder mindestens etwa 65 Gew.-% oder darüber, beispielsweise bei mindestens etwa 70 oder mindestens etwa 75 Gew.-%. Im Rahmen einer besonders bevorzugten Ausführungsform der vorliegenden Erfindung beträgt der Anteil der genannten Polymeren etwa 50 bis 70 Gew.-%.

Eine als Komponente A im Rahmen der vorliegende Erfindung einsetzbare Polymerdispersion kann neben den bislang genannten, durch Emulsionspolymerisation herstellbaren organischen Polymeren noch einen oder mehrere Zusatzstoffe enthalten. Geeignete Zusatzstoffe sind beispielsweise Schutzkolloide, Antioxidantien, Pigmente, Füllstoffe, Weichmacher, Konservierungsmittel, Entschäumer, Filmbildehilfsmittel, Geruchsstoffe, Haftvermittler, Lösemittel, Farbstoffe, Flammschutzmittel, Verlaufshilfsmittel, Tackifier, Viskositätsregulatoren, Dispergierhilfsmittel, Emulgatoren oder Verdickungsmittel oder ein Gemisch aus zwei oder mehr der genannten Zusatzstoffe.

Die Komponente A kann beispielsweise als Zusatzstoff ein Schutzkolloid oder ein Gemisch aus zwei oder mehr Schutzkolloiden enthalten. Als Schutzkolloide eignen sich beispielsweise veretherte Cellulosederivate wie Hydroxyethylcellulose, Hydroxypropylcellulose oder Carboxymethylcellulose. Ebenfalls geeignet sind Polyvinylpyrrolidon oder Polycarbonsäuren wie Polyacrylsäure oder Polymethacrylsäure, gegebenenfalls in Form ihrer Copolymerisate mit gegebenenfalls OH-Gruppen tragenden Estern der Acrylsäure oder Methacrylsäure, sowie Copolymere der Maleinsäure oder des Maleinsäureanhydrids mit weiteren ethylenisch ungesättigten Verbindungen wie Methylvinylether oder Styrol. Beispielsweise kann als Schutzkolloid Polyvinylalkohol, beispielsweise Polyvinylalkohol mit einem Hydrolysegrad von etwa 30 bis etwa 100 Gew.-%, beispielsweise etwa 60 bis etwa 98 Gew.-% oder etwa 70 bis etwa 88 Gew.-%, oder ein Gemisch aus zwei oder mehr solcher Polyvinylalkohole eingesetzt werden. Die in den als Komponente A einsetzbaren Polymerdispersionen eingesetzten Schutzkolloide können, wie oben beschrieben, einzeln eingesetzt werden. Es ist jedoch im Rahmen der vorliegenden Erfindung ebenso möglich, ein Gemisch aus zwei oder mehr der genannten Schutzkolloide einzusetzen.

Der gesamte Anteil des Schutzkolloids oder der Schutzkolloide an der als Komponente A einsetzbaren Polymerdispersion beträgt bis zu etwa 20 Gew.-%, beispielsweise etwa 0,1 bis etwa 15 oder etwa 1 bis etwa 10 Gew.-%.

Als Antioxidantien eignen sich beispielsweise phosphorige Säure und deren Salze, unterphosphorige Säure und deren Salze, Ascorbinsäure und deren Derivate (insbesondere Ascorbylpalmitat), Tocopherol und dessen Derivate, Mischungen von Ascorbinsäure-Derivaten und Tocopherol-Derivaten, sterisch gehinderte Phenolderivate, insbesondere BHA (tert.-Butylen-4-methoxyphenol) und BHT (2,6-Di-tert.-butylen-4-methylphenol), Gallussäure und deren Derivate, insbesondere Alkylgallate, aromatische Amine wie Diphenylamin, Naphthylamin oder 1,4-Phenylendiamin, Dihydrochinolin, organische Sulfide und Polysulfide, Dithiocarbamate und Mercaptobenzimidazol.

Als Viskositätsregulatoren kommen beispielsweise Celluloseether, gehärtetes Rizinusöl, hochdisperse Kieselsäuren sowie ionische oder nichtionische Verdickungsmittel wie Polyacrylsäure oder assoziative Verdicker in Frage.

Als Weichmacher werden beispielsweise Weichmacher auf Basis von Phthalsäure eingesetzt, insbesondere Dialkylphthalate, wobei als Weichmacher Phthalsäureester bevorzugt sind, die mit einem etwa 6 bis etwa 12 Kohlenstoffatomen aufweisenden, linearen Alkanol verestert wurden. Besonders bevorzugt ist hierbei das Dioctylphthalat.

Ebenfalls als Weichmacher geeignet sind Benzoatweichmacher, beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Poyethylenglykole und deren Derivate, beispielsweise Diphenylether von Poly(ethylenglykol), flüssige Harzderivate, beispielsweise der Methylester von hydriertem Harz, pflanzliche und tierische Öle, beispielsweise Glycerinester von Fettsäuren und deren Polymerisationsprodukte.

Zu den im Rahmen der Erfindung als Zusatzstoffe einsetzbaren Stabilisatoren oder Antioxidantien, zählen gehinderte Phenole hohen Molekulargewichts (Mₙ), polyfunktionelle Phenole und schwefel- und phosphorhaltige Phenole. Im Rahmen der Erfindung als Zusatzstoffe einsetzbare Phenole sind beispielsweise 1,3,5-Trimehtyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octa-decyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Di-tert-butylphenol; 6-(4-Hydroxyphenoxy)-2,4-bis(n-octyl-thio)-1,3,5-triazin; Di-n-Octadecyl-3,5-di-tert-butyl-4-hydroxybenzylphosphonate; 2-(n-octylthio)ethyl-3,5-di-tert-butyl-4-hydroxybenzoat, und Sorbithexa[3-(3,5-di-tert-butyl-4-hydroxyphenyl)propionat].

Als Photostabilisatoren sind beispielsweise diejenigen geeignet, die unter dem Namen Thinuvin® (Hersteller: Ciba Geigy) im Handel erhältlich sind.

Als Füllstoffe bzw. Pigmente kommenden beispielsweise Kreide, Schwerspat, Kaolin, Ruß, Gips, Aerosil, Kieselgel, Graphit, Metalloxide von Aluminium, Eisen, Zink, Titan, Chrom, Cobalt, Nickel, Mangan und dergleichen in Frage. Weiterhin geeignet sind die Mischoxide, Chromate, Molybdate, Carbonate, Silikate, Aluminate und Sulfate der obengenannten Elemente. Ebenfalls als Füllstoffe geeignet sind native oder synthetische Fasern, Cellulose, Holzspäne, Phthalocyanine oder Quarzmehl. Die genannten Füllstoffe bzw. Pigmente können einzeln oder als Gemisch aus zwei oder mehr davon eingesetzt werden.

Als Komponente B umfaßt das erfindungsgemäße Klebstoffsystem eine Dispersion eines Trockenmittels in einer bei 23 °C flüssigen Ölphase, wobei die Ölphase mindestens 0,1 Gew.-% einer in der Ölphase löslichen, bei 23 °C flüssigen Verbindung, die mindestens eine kovalente Einfach-, Doppel- oder Dreifachbindung zwischen einem C-Atom und einem Heteroatom aufweist, oder ein Gemisch aus zwei oder mehr solcher Verbindungen enthält.

Der Begriff "Ölphase" umfaßt dabei im Rahmen der vorliegenden Erfindung eine kontinuierliche Phase aus einer oder mehreren, bei 23 °C flüssigen Verbindungen, die keine oder nur eine geringe Mischbarkeit mit Wasser aufweisen. Eine geringe Mischbarkeit mit Wasser liegt dann vor, wenn in einem Gemisch aus Wasser und der entsprechenden Ölphase eine Phasenseparation eintritt, wobei die jeweils auftretenden Phasen noch geringe Mengen der die jeweils andere Phase darstellenden Verbindung oder des entsprechenden Gemischs aus zwei oder mehr solcher Verbindungen in gelöster Form enthalten kann. Im Rahmen einer bevorzugten Ausführungsform der vorliegenden Erfindung enthält eine "Ölphase" nur solche Verbindungen, deren Löslichkeit in Wasser bei 23 °C weniger als 1 g/l beträgt.

Die Ölphase der als Komponente B eingesetzten Dispersion enthält gemäß der vorliegenden Erfindung eine Verbindung, die mindestens eine kovalente Einfach-, Doppel- oder Dreifachbindung zwischen einem C-Atom und einem Heteroatom aufweist. Der Begriff "Heteroatom", wie er im Rahmen des vorliegenden Textes verwendet wird, umfaßt dabei alle Atome, die mit einem Kohlenstoff eine kovalente Einfach-, Doppel- oder Dreifachbindung eingehen können außer Wasserstoff und Kohlenstoff selbst. Im Rahmen einer bevorzugten Ausführungsform der vorliegenden Erfindung werden als Heteroatome insbesondere O, N, S und P bezeichnet. Derartige Verbindungen werden im Rahmen des vorliegenden Textes auch als polare Verbindungen bezeichnet.

Im Rahmen der vorliegenden Erfindung ist es bevorzugt, wenn die Ölphase polare Verbindungen enthält, deren Polarität die Polarität gewöhnlicher Kohlenwasserstofföle, beispielsweise von Paraffinöl oder auf aromatischen Kohlenwasserstoffen basierenden Ölen oder deren Gemischen übersteigt. Der Begriff "Polarität" bezieht sich dabei auf die Polarität der gesamten Ölphase. Besteht die Ölphase nur aus einer einzigen Verbindung, so entspricht die Polarität der Ölphase der Polarität der entsprechenden Verbindung. Enthält die Ölphase zwei oder mehr Verbindungen die bei einer Temperatur von 23 °C flüssig sind, so entspricht die Polarität der Ölphase, wie sie im Rahmen der vorliegenden Erfindung definiert wird, dem gewichteten Mittel der jeweiligen, die Ölphase bildenden Verbindungen.

Im Rahmen einer weiteren bevorzugten Ausführungsform der vorliegenden Erfindung enthält die Ölphase mindestens eine polare Verbindung, die eine Carbonylgruppe oder zwei oder mehr Carbonylgruppen, eine Estergruppe oder zwei oder mehr Estergruppen oder einer Ethergruppe oder zwei oder mehr Ethergruppen oder eine OH-Gruppe oder zwei oder mehr OH-Gruppen oder ein Gemisch aus zwei oder mehr der genannten Gruppen aufweist.

Im Rahmen einer weiteren bevorzugten Ausführungsform der vorliegenden Erfindung enthält die Ölphase als polare Verbindung eine Verbindung mit mindestens zwei Estergruppen oder mindestens zwei Ethergruppen oder mindestens einer Estergruppe und mindestens einer Ethergruppe oder mindestens zwei Estergruppen und einer Ethergruppe oder mindestens zwei Ethergruppen und einer Estergruppe oder mindestens drei Estergruppen.

Im Rahmen einer weiteren bevorzugten Ausführungsform der vorliegenden Erfindung beträgt der Anteil der polaren Verbindung oder des Gemischs aus zwei oder mehr polaren Verbindungen an der gesamten Ölphase mindestens etwa 30 Gew.-%, beispielsweise mindestens etwa 50 Gew.-%, mindestens etwa 70 Gew.-% oder mindestens etwa 90 Gew.-%. Es ist im Rahmen der vorliegenden Erfindung ebenfalls vorgesehen, daß die Ölphase im wesentlichen aus einer polaren Verbindung oder einem Gemisch aus zwei oder mehr polaren Verbindungen gemäß der obigen Definition besteht.

Als Ölphase oder als Bestandteil der Ölphase eignen sich alle Verbindungen, die keine oder nur eine geringe Mischbarkeit mit Wasser aufweisen. Geeignete Verbindungen sind beispielsweise Kohlenwasserstofföle wie Paraffinöle oder aromatischen Kohlenwasserstofföle oder deren Mischungen. Weiterhin eignen sich als Ölphase oder zumindest als Bestandteil der Ölphase natürliche Öle oder Fette oder deren Gemische, vorausgesetzt, daß die entsprechenden Verbindungen bzw. deren Gemische bei 23 °C flüssig sind. Ebenfalls geeignet sind Fettstoffe.

Unter "Fettstoffen" sind Fettsäuren, Fettalkohole und deren Derivate zu verstehen, wenn sie mindestens eine der oben genannten funktionellen Gruppen enthalten. Im allgemeinen ist ihr Molekulargewicht größer als 100, inbesondere größer als 200. Die obere Grenze ist 20.000, vorzugsweise 300 bis 1.500. Der Gewichtsanteil des Polyethers an dem Umsetzungsprodukt von Ethylenoxid bzw. Propylenoxid mit dem Fettstoff beträgt 1 : 0,01 bis 3, vorzugsweise 1 : 0,1 bis 2.

Unter "Fettsäuren" werden Säuren verstanden, die eine oder mehrere Carboxylgruppen (-COOH) enthalten. Die Carboxylgruppen können mit gesättigten, ungesättigten, unverzweigten oder verzweigten Alkylresten mit mehr als 8, insbesondere mehr als 12 C-Atomen verbunden sein. Sie können neben den oben beschriebenen -OH, -SH, -C = C-,-COOH, Amino-, Säureanhydrid-Gruppen oder Epoxidgruppen weitere Gruppen wie Ether-, Ester-, Halogen-, Amid-, Amino-, Urethan- und Harnstoffgruppen enthalten. Bevorzugt werden jedoch Carbonsäuren wie native Fettsäuren oder Fettsäuregemische, Dimerfettsäuren und Trimerfettsäuren. Konkrete Beispiele für die Fettsäuren sind neben den gesättigten insbesondere die ein- oder mehrfach ungesättigten Säuren Palmitolein-, Öl-, Elaidin-, Petroselin-, Eruca-, Ricinol-, Hydroxmethoxystearin-, 12-Hydroxystearin-, Linol-, Linolen- und Gadoleinsäure.

Neben den in der Natur vorkommenden Fettsäuren können auch Polyhydroxyfettsäuren eingesetzt werden. Diese können z.B. durch Epoxidation ungesättigter Fette und Öle oder Ester von Fettsäuren mit Alkoholen, Ringöffnung mit H-aktiven Verbindungen wie z.B. Alkoholen, Aminen und Carbonsäuren und anschließende Verseifung hergestellt werden. Die als Ausgangsmaterial benötigten Fette oder Öle können sowohl pflanzlichen als auch tierischen Ursprungs sein oder gegebenenfalls gezielt auf petrochemischem Weg synthetisiert werden.

Die Fettsäuren können auch von Öl- und Fett-basierten Rohstoffen abgeleitet sein, wie sie z.B. durch En-Reaktionen, Diels-Alder-Reaktionen, Umesterungen, Kondensationsreaktionen, Pfropfung (z.B. mit Maleinsäureanhydrid oder Acrylsäure usw.) und Epoxidierungen zugänglich sind. Als Beispiele hierfür seien genannt: a) Epoxide ungesättigter Fettsäuren wie Palmitolein-, Öl-, Elaidin-, Petroselin-, Eruca-, Linol-, Linolen, Gadoleinsäure, b) Umsetzungsprodukte ungesättigter Fettsäuren mit Maleinsäure, Maleinsäureanhydrid, Methacrylsäure oder Acrylsäure, c) Kondensationsprodukte von Hydroxycarbonsäuren wie Ricinolsäure oder 12-Hydroxystearinsäure und Polyhydroxycarbonsäuren.

Nicht alle der oben beschriebenen Fettsäuren sind bei Raumtemperatur stabil. Falls notwendig, können daher für die erfindungsgemäße Verwendung Derivate der oben genannten Fettsäuren wie Ester oder Amide eingesetzt werden.

In einer bevorzugten Ausfühmngsform der Erfindung werden Ester oder Partialester der oben genannten Fettsäuren mit ein- oder mehrwertigen Alkoholen verwendet. Unter "Alkoholen" sind Hydroxyl-Derivate von aliphatischen und alicyclischen gesättigten, ungesättigten, unverzweigten oder verzweigten Kohlenwasserstoffen zu verstehen. Hierzu gehören neben einwertigen Alkoholen auch die aus der Polyurethan-Chemie an sich bekannten niedermolekularen Kettenverlängerungsmittel bzw. Vernetzer mit Hydroxylgruppen. Konkrete Beispiele aus dem niedermolekularen Bereich sind Methanol, Ethanol, Propanol, Butanol, Pentanol, Decanol, Octadecanol, 2-Ethylhexanol, 2-Octanol, Ethylenglykol, Propylenglykol, Trimethylenglykol, Tetramethylenglykol, Butylenglykol-2,3, Hexamethylendiol, Octamethylendiol, Neopentylglykol, 1,4-Bishydroxymethylcyclohexan, Guerbetalkohol, 2-Methyl-1,3-Propandiol, Hexantriol-(1,2,6), Glycerin, Trimethylolpropan, Trimethylolethan, Pentaerythrit, Sorbit, Formit, Methylglycosid, Butylenglykol, die zu Alkoholen reduzierten Dimer- und Trimer-Fettsäuren. Von Kollophoniumharzen abgeleitete Alkohole wie Abietylalkohol können ebenfalls für die Veresterung verwendet werden.

Anstelle der Alkohole können auch OH-haltige tertiäre Amine, Polyglycerin oder teilweise hydrolysierte Polyvinylester verwendet werden.

Außerdem können zur Oligomerisierung Polycarbonsäuren oder Hydroxycarbonsäuren zugesetzt werden. Beispiele hierfür sind Oxalsäure, Malonsäure, Bernsteinsäure, Maleinsäure, Fumarsäure, Glutarsäure, Adipinsäure, Korksäure, Sebacinsäure, 1,11-Undecandisäure, 1,12-Dodecandisäure, Phthalsäure, Isophthalsäure, Terephthalsäure, Hexahydrophthalsäure, Tetrahydrophthalsäure oder Dimerfettsäure, Trimerfettsäure, Zitronensäure, Milchsäure, Weinsäure, Ricinolsäure, 12-Hydroxystearinsäure. Bevorzugt wird Adipinsäure verwendet.

Beispiele für geeignete Ester sind neben den teilweise verseiften Fette, wie Glycerinmonostearat, vorzugsweise die natürlichen Fette und Öle von Raps (neu), Sonnenblumen, Soja, Lein, Ricinus, Kokosnüssen, Ölpalmen, Ölpalmkernen und Ölbäumen und deren Methylester. Bevorzugte Fette und Öle sind z.B. Rindertalg mit einer Kettenverteilung von 67% Ölsäure, 2% Stearinsäure, 1% Heptadecansäure, 10% gesättigte Säuren der Kettenlänge C12 bis C16, 12% Linolsäure und 2% gesättigte Säuren mit > C18 Kohlenstoffatomen oder z.B. das Öl der neuen Sonnblume (NSb) mit einer Zusammensetzung von ca. 80% Ölsäure, 5% Stearinsäure, 8% Linolsäure und ca. 7% Palmitinsäure. Selbstverständlich können z.B. auch die entsprechenden Epoxide und Umsetzungsprodukte mit Maleinsäureanhydrid verwendet werden. Weitere Beispiele sind partiell und vollständig dehydratisiertes Ricinusöl, partiell acetyliertes Ricinusöl, Rinöffnungsprodukte von epoxydiertem Sojaöl mit Dimerfettsäuren.

Außerdem können Fettsäureester und ihre über Epoxidation zugänglichen Derivate verwendet werden. Als Beispiel für derartige Ester seien genannt: Sojafettsäuremethylester, Leinölfettsäuremethylester, Ricinolsäuremethylester, Epoxystearinsäuremethylester, Epoxystearionsäure-2-ethylhexylester. Von den Glyceriden werden die Triglyceride bevorzugt, z.B. Rüböl, Leinöl, Sojaöl, Ricinusöl, partiell und vollständig dehydratisierte Ricinusöle, partiell acetyliertes Ricinusöl, Sojaölepoxid, Leinölepoxid, Rübölexpoxid, epoxidiertes Sonnenblumenöl.

Weiterhin können auch die entsprechenden partiellen Epoxide der genannten Verbindungen verwendet werden, sofern die partiellen Epoxide wenigstens überwiegend noch mindestens eine olefinisch ungesättigte Doppelbindung aufweisen.

Im Rahmen einer bevorzugten Ausfühnmgsform der Erfindung wird ein ungesättigte Fettsäureester oder dessen über Epoxidierung zugängliches Derivat, oder ein Gemisch aus zwei oder mehr solcher Verbindungen als Komponente A verwendet. Beispiele für derartige Fettsäuren sind Sojafettsäuremethylester, Leinölfettsäuremethylester, Ricinolsäuremethylester, Expoxystearinsäuremethylester, oder Expoxystearinsäure-2-ethylhexylester.

Unter Nukleophilen sind im Rahmen der vorliegenden Erfindung Alkohole wie Methanol, Ethanol, Ethylenglykol, Glyzerin oder Trimethylolpropan oder Amine wie Ethanolamin, Diethanolamin, Triethanolamin, Ethylendiamin oder Hexamethylendiamin oder Carbonsäuren wie Essigsäure, die oben genannten Fettsäuren, Dimerfettsäure, Maleinsäure, Fumarsäure oder die oben genannten di- und höher-funktionellen gesättigten oder ungesättigten Di- und Polycarbonsäuren, Phthalsäure oder ein Gemisch aus zwei oder mehr davon, oder ein Gemisch aus zwei oder mehr Fettsäuren mit 6 bis 36 C-Atomen zu verstehen. Beispiele für solche Verbindungen sind Ringöffnungsprodukte von epoxidierten, ungesättigten Fettsäuren oder Fetten oder Ölen, beispielsweise von Sojaöl, mit Carbonsäuren, beispielsweise mit einer oder mehreren der oben genannten Fettsäuren.

Die Fette und Öle (Triglyceride) können sowohl in nativer Form als auch nach thermischer und/oder oxidativer Behandlung bzw. die über Epoxidation oder über die Addition von Maleinsäureanhydrid bzw. Acrylsäure zugänglichen Derivate eingesetzt werden. Konkrete Beispiele sind: Palmöl, Erdnußöl, Rüböl, Baumwollsaatöl, Sojaöl, Ricinusöl, partiell und vollständig dehydratisierte Ricinusöle, partiell acetylierte Ricinusöle, Sonnenblumenöl, Leinöl, Standöle, geblasene Öle, epoxidiertes Leinöl, Rapsöl, Kokosöl, Palmkernöl und Talge.

Als Derivate können auch Amide der oben genannten Fettsäuren verwendet werden. Diese können durch Umsetzung mit primären und sekundären Aminen oder Polyaminen erhalten werden, z.B. mit Monoethanolamin, Diethanolamin, Ethylendiamin, Hexamethylendiamin, Ammoniak, müssen jedoch noch nucleophile Gruppen enthalten für die Umsetzung mit den Alkylenoxiden.

Unter "Fettalkoholen" werden Verbindungen verstanden, die eine oder mehrere Hydroxylgruppen enthalten. Die Hydroxylgruppen können mit gesättigten, ungesättigten, unverzweigten oder verzweigten Alkylresten mit mehr als 8, insbesondere mehr als 12 C-Atomen verbunden sein. Sie können neben den für die spätere Umsetzung mit den Alkylenoxiden notwendigen -SH, -C = C-, -COOH-, Amino-, Säureanhydrid-Gruppen oder Epoxidgruppen weitere Gruppen enthalten, z.B. Ether-, Ester-, Halogen-, Amid-, Amino-, Harnstoff- und Urethan-Gruppen. Konkrete Beispiele für die erfindungsgemäßen Fettalkohole sind: Ricinoleylalkohol, 12-Hydroxystearylatkohol, Oleylalkohol, Erucylalkohol, Linoleylalkohol, Linolenylalkhol, Arachidylalkohol, Gadoleylalkohol, Erucylalkohol, Brassidylalkohol, Dimerdiol (= Hydrierungsprodukt des Dimerfettsäuremethylesters).

Als Derivate der Fettalkohole können symmetrische und unsymmetrische Ether und Ester mit Mono- und Polycarbonsäuren eingesetzt werden. Unter Monocarbonsäuren versteht man Ameisen-, Essig-, Propion-, Butter-, Valerian-, Capron-, Önanth-, Capryl-, Pelargon-, Caprin,-, Undecan-, Laurin-, Tridecan-, Myristin-, Pentadecan-, Palmitin-, Margarin-, Stearin-, Nonadecan-, Arachin-, Behen-, Lignocerin-, Cerotin- und Melissensäure. Polycarbonsäuren sind z.B. Oxalsäure, Adipinsäure, Maleinsäure, Weinsäure und Zitronensäure. Gleichzeitig können als Carbonsäure auch die oben beschriebenen Fettsäuren eingesetzt werden, z.B. Ölsäureoleylester.

Die Fettalkohole können auch verethert sein, insbesondere mit mehrwertigen Alkoholen, z.B. Alkylpolyglykoside, Dimerdiolether. Natürlich können auch Gemische obiger Fettstoffe als Startmoleküle für die Umsetzung mit den Alkylenoxiden verwendet werden

Weiterhin geeignet als Ölphase sind die Ester der aliphatischen oder aromatischen Carbonsäuren, beispielsweise die Ester der Adipinsäure, Sebacinsäure, Zitronensäure, Benzoesäure oder der isomeren Phthalsäuren oder Gemische dieser Stoffe, vorausgesetzt, daß die Verbindungen oder deren Gemische bei 23 °C flüssig sind. Beispiele hierfür sind Phthalsäureester, Adipinsäureester, Sebacinsäureester oder Zitronensäureester, Polyesteradipate, Benzoesäureester oder Kolophoniumweichharzester (Flüssigharze).

Weiterhin als Ölphase geeignet sind Kohlenwasserstofföle wie Paraffine, Isoparaffine, aromatische und aliphatische Öle sowie flüssige Kohlenwasserstoffharze.

Die im Rahmen der vorliegenden Erfindung in den erfindungsgemäßen Klebstoffsystemen eingesetzten Komponenten B enthalten ein in der Ölphase dispergiertes Trockenmittel oder ein Gemisch aus zwei oder mehr solcher Trockenmittel. Als Trockenmittel eignen sich im Rahmen der vorliegenden Erfindung alle Verbindungen, welche mit Wasser entweder eine unter den bei der Reaktion vorliegenden Reaktionsbedingungen im wesentlichen irreversible chemische Reaktion eingehen oder das Wasser adsorbieren, so daß es ebenfalls unter den im Verlauf der Adsorption herrschenden Bedingungen nicht, oder nur langsam wieder abgegeben wird. Die beiden genannten Trockenmitteltypen werden üblicherweise als chemische Trockenmittel und als physikalische Trockenmittel bezeichnet

Trockenmittel, wie sie im Rahmen der vorliegenden Erfindung zum Einsatz in Komponente B geeignet sind, müssen ihre Reaktion mit Wasser im wesentlichen irreversibel eingehen. Unter "irreversibel" wird im Rahmen der vorliegenden Erfindung verstanden, daß die chemische oder physikalische Reaktion unter den zu erwartenden Einsatzbedingungen für das Klebstoffsystem im wesentlichen irreversibel ist. Entsprechende Einsatzbedingungen umfassen beispielsweise einen Temperaturbereich von etwa -30 bis etwa 120 °C insbesondere etwa 0 bis etwa 100 °C oder etwa 10 bis etwa 80 °C oder etwa 20 bis etwa 60 °C. Die Irreversibilität der Reaktion sollte auch noch unter verschiedensten Bedingungen bezüglich der Luftfeuchtigkeit gegeben sein. Idealerweise ist die chemische oder physikalische Reaktion zwischen Wasser und dem Trockenmittel in einem Bereich zwischen 0 und 100 % relativer Luftfeuchte im wesentlichen irreversibel.

Zu den anorganischen chemischen Trockenmitteln zählen insbesondere solcher Trockenmittel, die mit Wasser "abbinden" (hydraulische Bindemittel). Zu den hydraulischen Bindemitteln zählen beispielsweise die Oxide der Alkali- oder Erdalkalimetalle wie Magnesiumoxid, Bariumoxid, Calciumoxid, Natriumoxid, Lithiumoxid oder Kaliumoxid. Ebenfalls geeignete hydraulische Bindemittel sind Zemente die in unterschiedlicher Zusammensetzung Calciumsilikate, Calciumaluminate und Calciumferrite enthalten. Geeignete Zementtypen sind beispielsweise Hochofenzement, Traßzement, Portland-Ölschieferzement, Flugaschezement, Phonolithzement, Vulkanzement, Sulfathüttenzement, Tonerdezement, Quellzement oder Schnellzement. Weiterhin als Trockenmittel geeignet sind die Oxide des Phosphors sowie die polymeren Phosphorsäuren. Ebenfalls als anorganische chemische Trockenmittel geeignet sind Verbindungen, die mit Wasser unter Einlagerung des Wassers in ihr die Kristallgitter reagieren (Bildung von Kristallwasser). Derartige Verbindungen sind beispielsweise Magnesiumsulfat, Natriumsulfat, Kupfersulfat, Calciumsulfat, Magnesiumcarbonat, Calciumchlorid, Kaliumcarbonat, Magnesiumperchlorat, Ettringit und dergleichen.

Als physikalische Trockenmittel eignen sich insbesondere physikalische anorganische Trockenmittel, beispielsweise Zeolithe, Schichtsilicate, Kieselgele oder Montmorillonite wie sie üblicherweise als Molekularsiebe eingesetzt werden.

Die im Rahmen der vorliegenden Erfindung als Komponente B einsetzbare Dispersion eines Trockenmittels in einer Ölphase weist einen Anteil an Trockenmittel, bezogen auf die gesamte Komponente B, von mindestens etwa 0,1 Gew.-% auf. Da die Komponenten A und B durch Vermischung zur Herstellung eines Klebstoffs eingesetzt werden ist es zweckmäßig, wenn beide Komponenten in ihren Inhaltsstoffen aufeinander abgestimmt sind und vorzugsweise zusammen als Kit abgegeben werden. Der Gehalt der Komponente B an Trockenmittel soll daher vorzugsweise so bemessen sein, daß er zur Trocknung der Komponente A, das heißt, zur Aufnahme wenigstens eines zur Trocknung ausreichenden Anteils des in Komponente A vorliegenden Wassers ausreicht. Es ist in diesem Zusammenhang nicht unbedingt notwendig, daß das gesamte Wasser aus Komponente A entfernt wird. Gegebenenfalls kann es ausreichend sein, nur einen bestimmten Anteil des Wassers zu entfernen, beispielsweise etwa 50 Gew.-%, etwa 70 Gew.-% oder etwa 90 Gew.-%. In einer bevorzugten Ausführungsform der vorliegenden Erfindung wird der Anteil an Trockenmittel in Komponente B jedoch so bemessen, daß im wesentlichen das gesamte Wasser aus Komponente A, das heißt, mindestens etwa 95 Gew.-% oder mindestens etwa 99 Gew.-% gebunden werden kann. In einer bevorzugten Ausführungsform der Erfindung enthält Komponente B das Trockenmittel daher in einer Menge von etwa 20 bis etwa 90 Gew.-%, beispielsweise etwa 30 bis etwa 80 Gew.-% oder etwa 40 bis etwa 70 Gew.-%. Je nach Beschaffenheit der Komponente A kann der Gehalt der Komponente B an Trockenmittel beispielsweise bei etwa 40 bis etwa 60 Gew.-% liegen.

Geeignete Komponenten B sind beispielsweise Gemische von Ettringit-bildendem Zement in Ricinusöl (Mischungsverhältnis 5:1 - 1:5), Weißkalk in epoxidiertem Sojaöl (Mischungsverhältnis 5:1 - 1:5) oder Portlandzement in einem Diethylenglykoldibenzoat-Triethylenglykoldibenzoat-Dipropylenglykoldibenzoat-Gemisch.

Die Komponente B kann im Rahmen der vorliegenden Erfindung noch einen weiteren Zusatzstoff oder ein Gemisch zwei oder mehr weiteren Zusatzstoffen enthalten. Weitere Zusatzstoffe sind beispielsweise Schutzkolloide, Antioxidantien, Pigmente, Füllstoffe, Konservierungsmittel, Entschäumer, Filmbildehilfsmittel, Geruchsstoffe, Haftvermittler, Lösemittel, Farbstoffe, Flammschutzmittel, Verlaufshilfsmittel, Tackifier, Viskositäts- und Rheologieregulatoren, Dispergierhilfsmittel, Emulgatoren, Verdickungsmittel oder Antiabsetzmittel.

Der Anteil derartiger Zusatzstoffe an der gesamten Komponente B beträgt im Rahmen einer bevorzugten Ausführungsform der vorliegenden Erfindung bis zu höchstens etwa 30 Gew.-%, vorzugsweise liegt dieser Anteil jedoch darunter, beispielsweise bei etwa 0,5 bis etwa 10 Gew.-%.

Die obengenannten Komponenten A und B können zur Herstellung von Klebstoffen eingesetzt werden. Gegenstand der vorliegenden Erfindung ist demnach auch ein Verfahren zur Herstellung eines Klebstoffs, bei dem mindestens zwei Komponenten A und B vermischt werden, wobei als
a) Komponente A eine wäßrige Dispersion eines durch Polyaddition oder durch Polymerisation eines mindestens eine olefinisch ungesättigte Doppelbindung aufweisenden Monomeren, oder eines Gemischs aus zwei oder mehr solcher Monomeren erhältlichen Polymeren oder eines Gemischs aus zwei oder mehr solcher Polymerer und als
b) Komponente B eine Dispersion eines Trockenmittels in einer bei 23 °C flüssigen Ölphase, wobei die Ölphase mindestens 0,1 Gew.-% einer in der Ölphase löslichen, bei 23 °C flüssigen Verbindung, die mindestens eine kovalente Einfach-, Doppel- oder Dreifachbindung zwischen einem C-Atom und einem Heteroatom aufweist, oder ein Gemisch aus zwei oder mehr solcher Verbindungen,
eingesetzt wird.

Gegebenenfalls können zur Herstellung des entsprechenden Klebstoffs neben den Komponenten A und B noch weitere Komponenten eingesetzt werden. Derartige weitere Komponenten können beispielsweise organische oder anorganische Zuschlagstoffe wie Sand, Kunststoffgranulate, Kunststoffmehle, Gummigranulate, Gummimehle, Glasgranulate oder Glasperlen oder ein Gemisch aus zwei oder mehr der genannten Zuschlagstoffe sein.

Gegenstand der vorliegenden Erfindung ist daher auch ein Klebstoff, der durch Vermischen von mindestens zwei Komponenten A und B erhältlich ist, wobei
a) als Komponente A eine wäßrige Dispersion eines durch Polyaddition oder durch Polymerisation eines mindestens eine olefinisch ungesättigte Doppelbindung aufweisenden Monomeren, oder eines Gemischs aus zwei oder mehr solcher Monomeren erhältlichen Polymeren oder eines Gemischs aus zwei oder mehr solcher Polymerer und
b) als Komponente B eine Dispersion eines Trockenmittels in einer bei 23 °C flüssigen Ölphase, wobei die Ölphase mindestens 0,1 Gew.-% einer in der Ölphase löslichen, bei 23 °C flüssigen Verbindung, die mindestens eine kovalente Einfach-, Doppel- oder Dreifachbindung zwischen einem C-Atom und einem Heteroatom aufweist, oder ein Gemisch aus zwei oder mehr solcher Verbindungen,
eingesetzt wird.

Es hat sich gezeigt, daß auch Kombinationen aus Komponente A und Komponente B als Klebstoffe einsetzbar sind, wenn Komponente B nur einen geringen oder keinen Anteil an polaren Verbindungen aufweist. Gegenstand der vorliegenden Erfindung ist daher auch die Verwendung eines mindestens zwei Komponenten A und B umfassenden Klebstoffsystems zur Herstellung von Klebstoffen, wobei
a) als Komponente A eine wäßrige Dispersion eines durch Polyaddition oder durch Polymerisation eines mindestens eine olefinisch ungesättigte Doppelbindung aufweisenden Monomeren, oder eines Gemischs aus zwei oder mehr solcher Monomeren erhältlichen Polymeren oder eines Gemischs aus zwei oder mehr solcher Polymerer und
b) als Komponente B eine Dispersion eines Trockenmittels in einer bei 23 °C flüssigen Ölphase
eingesetzt wird.

In einer bevorzugten Ausführungsform der erfindungsgemäßen Verwendung enthält die Ölphase mindestens 0,1 Gew.-% einer in der Ölphase löslichen, bei 23 °C flüssigen Verbindung, die mindestens eine kovalente Einfach-, Doppel- oder Dreifachbindung zwischen einem C-Atom und einem Heteroatom aufweist, oder ein Gemisch aus zwei oder mehr solcher Verbindungen.

Die nach dem erfindungsgemäßen Verfahren herstellbaren Klebstoffe eignen sich zur Verklebung von gleichen oder verschiedenen Substraten. Geeignete Substrate sind beispielsweise Holz, Kork, Metall, Kunststoff, Textilien, Stein, Beton und dergleichen. Im Rahmen einer bevorzugten Ausführungsform der vorliegenden Erfindung werden die Klebstoffe zur Verklebung wasserempfindlicher Substraten, beispielsweise zur Verklebung von Parkett oder Laminat auf Böden in Innenräumen eingesetzt.

Ebenfalls Gegenstand der vorliegenden Erfindung ist daher die Verwendung eines erfindungsgemäßen Klebstoffs zur Verklebung von Materialien aus Holz, Kork, Metall, Kunststoff, Textilien, Elastomeren, Stein oder Beton.

Die erfindungsgemäßen Klebstoffe eignen sich sowohl zur Verklebung wasserdurchlässiger Substrate als auch zur Verklebung wasserundurchlässiger Substrate. So können neben den oben genannten Materialien beispielsweise auch Kunststoffsubstrate, insbesondere in Bahn- oder Bogenform, beispielsweise elastomere Kunststoffe, verklebt werden. Besonders geeignet sind die erfindungsgemäßen Klebstoffe zur Verklebung von Elastomeren auf Dächern oder Fußböden.

Die Erfindung wird nachfolgend durch Beispiele näher erläutert.

### Beispiele

Folgende Komponenten A und B wurden zur Herstellung von Klebstoffen eingesetzt:

| | |
|---|---|
| Komponente A1 | Dispersion aus 65 Gew.-% Vinylacetat, 10 Gew.-% Ethylen und 25 Gew.-% Vinylversatat, Festkörpergehalt: etwa 60 % |
| Komponente A2 | Dispersion aus 50 Gew.-% Styrol und 50 Gew.-% Butylacrylat, Festkörpergehalt: etwa 50 % |
| Komponente B1 | Ettringit-bildender Zement in Ricinusöl (Mischungsverhältnis 2:1) |
| Komponente B2 | Weißkalk in epoxidiertem Sojaöl (Mischungsverhältnis 2:1) |

### Ausführungsbeispiele:

Es wurden aus den oben beschriebenen Komponenten A und B durch Mischen der entsprechenden Mengen folgende verschiedene Klebstoffe hergestellt und die Mischungen beurteilt:

| | | | | |
|---|---|---|---|---|
| Klebstoff Nr.: | 1 | 2 | 3 | 4 |
| Komp. A1 | 33g | 33g | 33g | |
| Komp. A2 | | | | 33g |
| Komp. B1 | 67g | | 67g | 67g |
| Komp. B2 | | 67g | | |
| Gummigranulat* | | | 3g | |
| Mischbarkeit | gut | gut | sehr gut | sehr gut |
| Verstreichbarkeit | gut | befriedigend | gut | sehr gut |

| | | | | |
|---|---|---|---|---|
| (* Das Gummigranulat wurde zur Komponente B1 vor dem Mischen der beiden Komp. Hinzugegeben.) | | | | |

Aus den Klebstoffen wurden Filme hergestellt. Diese wurden nach den folgenden Kriterien beurteilt:

| | | | | |
|---|---|---|---|---|
| Kleber Nr.: | 1 | 2 | 3 | 4 |
| Elastizität* (1-6) | 2 | 5 | 3 | 5 |
| Klebrigkeit* (1-6) | 3 | 6 | 2 | 6 |
| Härte* (1-6) | 3 | 2 | 3 | 4 |
| Rückstellvermögen* (1-6) | 1 | 2 | 1 | 3 |
| Ausschwitzen | nein | nein | nein | nein |

| | | | | |
|---|---|---|---|---|
| (* Benotung: 1 = sehr elastisch, sehr klebrig, sehr hart, hohes Rückstellvermögen 6 = unelastisch, klebfrei, weich, kein Rückstellvermögen) | | | | |

Mit den Klebstoffen wurde handelsübliches Laminat auf Zementestrichplatten verlegt. Die Adhäsion am Untergrund und am Substrat war gut.

### Dämmende Eigenschaften des Klebstoffs:

### Versuchsaufbau:

Auf Zementestrichplatten wurde handelsübliches Laminat verlegt:
a) Lose aufliegendes Laminat auf lose liegender Dämmunterlage aus Ethylenvinylacetatgranulat auf der Estrichplatte (übliche Vorgehensweise bei etwa 90 % der Verlegung von Laminat)
b) Direktklebung auf die Estrichplatte mit einem nicht elastischen Polyurethanklebstoff, der üblicherweise für die Klebung von Parkett und Laminat eingesetzt wird (bei etwa 9% der Laminatanwendungen)
c) Klebung einer Trittschalldämmunterlage (3 mm dick) aus Ethylenvinylacetatgranulat mit o.g. Klebstoff und darauf das Laminat mit demselben Klebstoff (üblich bei etwa 1% der Anwendungen)
d) Direktklebung mit dem erfindungsgemäßen Klebstoff (Kleber Nr. 1 aus Beispielen oben)

Ergebnis einer Raumschallmessung bei Schallerzeugung durch ein Hammerwerk:
a) Messbarer Schallpegel 93 db
b) Messbarer Schallpegel 89 db
c) Messbarer Schallpegel 83 db
d) Messbarer Schallpegel 83 db

Das lose Auslegen der Ware auf einer Schalldämmenden Unterlage (a) ergibt die schlechtesten Werte. Auch durch einfaches Kleben (b) mit heute verfügbaren Produkten läßt sich kein deutlicher Vorteil erzielen. Kleben mit Dämmunterlage (c) bringt zwar eine gute Schalldämmung, ist jedoch aufwendig (2 Arbeitsgänge) und kostenintensiv. Kleben mit dem erfindungsgemäßen Klebstoff (d) bringt deutlichen Gewinn bei der Schalldämmung und läßt sich in einem Arbeitsgang auftragen. Der erfindungsgemäße Klebstoff ist damit einfach und kostengünstig anzuwenden bei allen heute in der Regel lose, d.h. schwimmend verlegten harten Böden (z.B. Laminat, Fertigparkett).

## Patentansprüche

1. Mindestens zwei getrennte Komponenten A und B aufweisendes Klebstoffsystem, wobei das Klebstoffsystem
a) als Komponente A eine wäßrige Dispersion eines durch Polyaddition oder durch Polymerisation eines mindestens eine olefinisch ungesättigte Doppelbindung aufweisenden Monomeren, oder eines Gemischs aus zwei oder mehr solcher Monomeren erhältlichen Polymeren oder eines Gemischs aus zwei oder mehr solcher Polymerer und
b) als Komponente B eine Dispersion eines Trockenmittels in einer bei 23 °C flüssigen Ölphase enthält, wobei die Ölphase mindestens 0,1 Gew.-% einer in der Ölphase löslichen, bei 23 °C flüssigen, polaren Verbindung, die mindestens eine kovalente Einfach-, Doppel- oder Dreifachbindung zwischen einem C-Atom und einem Heteroatom aufweist, oder ein Gemisch aus zwei oder mehr solcher polaren Verbindungen,
umfaßt.

2. Klebstoffsystem nach Anspruch 1, **dadurch gekennzeichnet, daß** die Ölphase mindestens 50 Gew.-% der polaren Verbindung oder des Gemischs aus zwei oder mehr polaren Verbindungen enthält.

3. Klebstoffsystem nach Anspruch 1 oder 2, **dadurch gekennzeichnet, daß** die Ölphase als polare Verbindung eine Verbindung mit einer Carbonylgruppe oder zwei oder mehr Carbonylgruppen, einer Estergruppe oder zwei oder mehr Estergruppen oder einer Ethergruppe oder zwei oder mehr Ethergruppen oder einer OH-Grruppe oder zwei oder mehr OH-Gruppen oder einem Gemisch aus zwei oder mehr der genannten Gruppen aufweist.

4. Klebstoffsystem nach einem der Ansprüche 1 bis 3, **dadurch gekennzeichnet, daß** die Ölphase als polare Verbindung eine Verbindung mit mindestens zwei Estergruppen oder mindestens zwei Ethergruppen oder mindestens einer Estergruppe und mindestens einer Ethergruppe oder mindestens zwei Estergruppen und einer Ethergruppe oder mindestens zwei Ethergruppen und einer Estergruppe oder mindestens drei Estergruppen enthält.

5. Klebstoffsystem nach einem der Ansprüche 1 bis 4, **dadurch gekennzeichnet, daß** die Ölphase mindestens 90 Gew.-% einer polaren Verbindung oder eines Gemischs aus zwei oder mehr polaren Verbindungen enthält.

6. Klebstoffsystem nach einem der Ansprüche 1 bis 5, **dadurch gekennzeichnet, daß** die Komponente B mindestens 30 Gew.-% Trockenmittel enthält.

7. Klebstoffsystem nach einem der Ansprüche 1 bis 6, **dadurch gekennzeichnet, daß** die Ölphase als Trockenmittel ein anorganisches Trockenmittel enthält.

8. Klebstoffsystem nach einem der Ansprüche 1 bis 7, **dadurch gekennzeichnet, daß** die Komponente A als Polymeres ein durch Polymerisation von Acrylsäure oder einem oder mehreren Acrylsäurederivaten, Methacrylsäure oder einem oder mehreren Methacrylsäurederivaten, Ethylen, Vinylacetat, Styrol oder einem oder mehreren Styrolderivaten oder durch Copolymerisation von zwei oder mehr der genannten Verbindungen erhältliches Polymeres enthält.

9. Verfahren zur Herstellung eines Klebstoffs, bei dem mindestens zwei Komponenten A und B vermischt werden, wobei
a) als Komponente A eine wäßrige Dispersion eines durch Polyaddition oder durch Polymerisation eines mindestens eine olefinisch ungesättigte Doppelbindung aufweisenden Monomeren, oder eines Gemischs aus zwei oder mehr solcher Monomeren erhältlichen Polymeren oder eines Gemischs aus zwei oder mehr solcher Polymerer und
b) als Komponente B eine Dispersion eines Trockenmittels in einer bei 23 °C flüssigen Ölphase, wobei die Ölphase mindestens 0,1 Gew.-% einer in der Ölphase löslichen, bei 23 °C flüssigen, polaren Verbindung, die mindestens eine kovalente Einfach-, Doppel- oder Dreifachbindung zwischen einem C-Atom und einem Heteroatom aufweist, oder ein Gemisch aus zwei oder mehr solcher Verbindungen,
eingesetzt wird.

10. Klebstoff, herstellbar nach einem Verfahren gemäß Anspruch 9.

11. Verwendung einer Dispersion eines Trockenmittels in einer bei 23 °C flüssigen Ölphase, wobei die Ölphase mindestens 0,1 Gew.-% einer in der Ölphase löslichen, bei 23 °C flüssigen, polaren Verbindung, die mindestens eine kovalente Einfach-, Doppel- oder Dreifachbindung zwischen einem C-Atom und einem Heteroatom aufweist, oder ein Gemisch aus zwei oder mehr solcher Verbindungen, zur Herstellung eines Klebstoffs.

12. Verwendung einer durch Vermischen von mindestens zwei Komponenten A und B herstellbaren Zusammensetzung, wobei
a) Komponente A eine wäßrige Dispersion eines durch Polyaddition oder durch Polymerisation eines mindestens eine olefinisch ungesättigte Doppelbindung aufweisenden Monomeren, oder eines Gemischs aus zwei oder mehr solcher Monomeren erhältlichen Polymeren oder eines Gemischs aus zwei oder mehr solcher Polymerer und
b) Komponente B eine Dispersion eines Trockenmittels in einer bei 23 °C flüssigen Ölphase
eingesetzt wird, als Klebstoff.

13. Verwendung nach Anspruch 12, **dadurch gekennzeichnet, daß** die Ölphase mindestens 0,1 Gew.-% einer in der Ölphase löslichen, bei 23 °C flüssigen, polaren Verbindung, die mindestens eine kovalente Einfach-, Doppel- oder Dreifachbindung zwischen einem C-Atom und einem Heteroatom aufweist, oder ein Gemisch aus zwei oder mehr solcher Verbindungen enthält.

14. Verwendung eines erfindungsgemäßen Klebstoffsystems gemäß einem der Ansprüche 1 bis 8 oder eines nach einem Verfahren gemäß Anspruch 9 hergestellten Klebstoffs zur Verklebung von Materialien aus Holz, Kork, Metall, Kunststoff, Stein oder Beton.

## Claims

1. An adhesive system of at least two separate components A and B, **characterized in that** it comprises
a) as component A an aqueous dispersion of a polymer obtainable by polyaddition or by polymerization of a monomer containing at least one olefinically unsaturated double bond or a mixture of two or more such monomers or an aqueous dispersion of a mixture of two or more such polymers and
b) as component B a dispersion of a drying agent in an oil phase liquid at 23°C, the oil phase containing at least 0.1 % by weight of a polar compound liquid at 23°C which is soluble in the oil phase and which contains at least one covalent single, double or triple bond between a carbon atom and a hetero atom or a mixture of two or more such polar compounds.

2. An adhesive system as claimed in claim 1, **characterized in that** the oil phase contains at least 50% by weight of the polar compound or the mixture of two or more polar compounds.

3. An adhesive system as claimed in claim 1 or 2, **characterized in that** the oil phase contains as the polar compound a compound containing one carbonyl group or two or more carbonyl groups, one ester group or two or more ester groups or one ether group or two or more ether groups or one OH group or two or more OH groups or a mixture of two or more of the groups mentioned.

4. An adhesive system as claimed in any of claims 1 to 3, **characterized in that** the oil phase contains as the polar compound a compound containing at least two ester groups or at least two ether groups or at least one ester group and at least one ether group or at least two ester groups and one ether group or at least two ether groups and one ester group or at least three ester groups.

5. An adhesive system as claimed in any of claims 1 to 4, **characterized in that** the oil phase contains at least 90% by weight of a polar compound or of a mixture of two or more polar compounds.

6. An adhesive system as claimed in any of claims 1 to 5, **characterized in that** component B contains at least 30% by weight of drying agent.

7. An adhesive system as claimed in any of claims 1 to 6, **characterized in that** the oil phase contains an inorganic drying agent as the drying agent.

8. An adhesive system as claimed in any of claims 1 to 7, **characterized in that** component A contains as the polymer a polymer obtainable by polymerization of acrylic acid or one or more acrylic acid derivatives, methacrylic acid or one or more methacrylic acid derivatives, ethylene, vinyl acetate, styrene or one or more styrene derivatives or by copolymerization of two or more of the compounds mentioned.

9. A process for the production of an adhesive in which at least two components A and B are mixed,
a) component A being an aqueous dispersion of a polymer obtainable by polyaddition or by polymerization of a monomer containing at least one olefinically unsaturated double bond or a mixture of two or more such monomers or an aqueous dispersion of a mixture of two or more such polymers and
b) component B being a dispersion of a drying agent in an oil phase liquid at 23°C, the oil phase containing at least 0.1 % by weight of a polar compound liquid at 23°C which is soluble in the oil phase and which contains at least one covalent single, double or triple bond between a carbon atom and a hetero atom or a mixture of two or more such compounds.

10. An adhesive obtainable by the process claimed in claim 9.

11. The use of a dispersion of a drying agent in an oil phase liquid at 23°C, the oil phase containing at least 0.1% by weight of a polar compound liquid at 23°C which is soluble in the oil phase and which contains at least one covalent single, double or triple bond between a carbon atom and a hetero atom or a mixture of two or more such compounds, for the production of an adhesive.

12. The use of a composition obtainable by mixing at least two components A and B,
a) component A being an aqueous dispersion of a polymer obtainable by polyaddition or by polymerization of a monomer containing at least one olefinically unsaturated double bond or a mixture of two or more such monomers or an aqueous dispersion of a mixture of two or more such polymers and
b) component B being a dispersion of a drying agent in an oil phase liquid at 23°C,
as an adhesive.

13. The use claimed in claim 12, **characterized in that** the oil phase contains at least 0.1% by weight of a polar compound liquid at 23°C which is soluble in the oil phase and which contains at least one covalent single, double or triple bond between a carbon atom and a hetero atom or a mixture of two or more such compounds.

14. The use of the adhesive system claimed in any of claims 1 to 8 or of an adhesive produced by the process claimed in claim 9 for bonding materials of wood, cork, metal, plastics, stone or concrete.

## Revendications

1. Système de colle présentant au moins deux composants séparés A et B, le système de colle comprenant :
a) à titre de composant A, une dispersion aqueuse d'un polymère que l'on obtient par polyaddition ou par polymérisation d'un monomère présentant au moins une liaison double à insaturation oléfinique ou d'un mélange de deux monomères de ce type ou plus, ou bien d'un mélange de deux polymères de ce type ou plus ; et
b) à titre de composant B, une dispersion d'un dessiccateur dans une phase huileuse liquide à 23°C, la phase huileuse comprenant, à concurrence d'au moins 0,1 % en poids, un composé polaire, liquide à 23°C, soluble dans la phase huileuse, qui présente au moins une liaison simple, double ou triple covalente entre un atome de carbone et un hétéroatome, ou bien un mélange constitué par deux composés polaires de ce type ou plus.

2. Système de colle selon la revendication 1, **caractérisé en ce que** la phase huileuse contient le composé polaire ou le mélange de deux composés polaires ou plus à concurrence d'au moins 50 % en poids.

3. Système de colle selon la revendication 1 ou 2, **caractérisé en ce que** la phase huileuse présente, à titre de composé polaire, un composé comprenant un groupe carbonyle ou deux groupes carbonyle ou plus, un groupe ester ou deux groupes esters ou plus ou bien un groupe éther ou deux groupes éther ou plus ou bien un groupe OH ou deux groupes OH ou plus ou bien un mélange de deux des groupes mentionnés ou plus.

4. Système de colle selon l'une quelconque des revendications 1 à 3, **caractérisé en ce que** la phase huileuse contient, à titre de composé polaire, un composé comprenant au moins deux groupes esters ou au moins deux groupes éthers ou au moins un groupe ester et au moins un groupe éther ou au moins deux groupes esters et un groupe éther ou au moins deux groupes éthers et un groupe ester ou au moins trois groupes esters.

5. Système de colle selon l'une quelconque des revendications 1 à 4, **caractérisé en ce que** la phase huileuse contient un composé polaire ou un mélange de deux composés polaires ou plus à concurrence d'au moins 90 % en poids.

6. Système de colle selon l'une quelconque des revendications 1 à 5, **caractérisé en ce que** le composant B contient un dessiccateur à concurrence d'au moins 30 % en poids.

7. Système de colle selon l'une quelconque des revendications 1 à 6, **caractérisé en ce que** la phase huileuse contient un dessiccateur inorganique à titre de dessiccateur.

8. Système de colle selon l'une quelconque des revendications 1 à 7, **caractérisé en ce que** le composant A contient, à titre de polymère, un polymère que l'on obtient par polymérisation d'acide acrylique ou d'un ou de plusieurs dérivés d'acide acrylique, d'acide méthacrylique ou d'un ou de plusieurs dérivés d'acide méthacrylique, d'éthylène, d'acétate de vinyle, de styrène ou d'un ou de plusieurs dérivés du styrène ou encore par copolymérisation de deux des composés mentionnés ou plus.

9. Procédé pour la préparation d'une colle, dans lequel on mélange au moins deux composants A et B, dans lequel on met en oeuvre
a) à titre de composant A, une dispersion aqueuse d'un polymère que l'on obtient par polyaddition ou par polymérisation d'un monomère présentant au moins une liaison double à insaturation oléfinique ou d'un mélange de deux monomères de ce type ou plus, ou bien d'un mélange de deux polymères de ce type ou plus ; et
b) à titre de composant B, une dispersion d'un dessiccateur dans une phase huileuse liquide à 23°C, la phase huileuse comprenant, à concurrence d'au moins 0,1 % en poids, un composé polaire, liquide à 23°C, soluble dans la phase huileuse, qui présente au moins une liaison simple, double ou triple covalente entre un atome de carbone et un hétéroatome, ou bien un mélange constitué par deux composés de ce type ou plus.

10. Colle que l'on peut préparer conformément à un procédé selon la revendication 9.

11. Utilisation d'une dispersion d'un dessiccateur dans une phase huileuse liquide à 23°C, la phase huileuse comprenant, à concurrence d'au moins 0,1 % en poids, un composé polaire, liquide à 23°C, soluble dans la phase huileuse, qui présente au moins une liaison simple, double ou triple covalente entre un atome de carbone et un hétéroatome, ou bien un mélange constitué par deux composés de ce type ou plus, pour la préparation d'une colle.

12. Utilisation d'une composition que l'on peut préparer par mélange d'au moins deux composants A et B, dans laquelle on met en oeuvre
a) à titre de composant A, une dispersion aqueuse d'un polymère que l'on obtient par polyaddition ou par polymérisation d'un monomère présentant au moins une liaison double à insaturation oléfinique ou d'un mélange de deux monomères de ce type ou plus, ou bien d'un mélange de deux polymères de ce type ou plus ; et
b) à titre de composant B, une dispersion d'un dessiccateur dans une phase huileuse liquide à 23°C,
à titre de colle.

13. Utilisation selon la revendication 12, **caractérisée en ce que** la phase huileuse contient, à concurrence d'au moins 0,1 % en poids, un composé polaire, liquide à 23°C, soluble dans la phase huileuse, qui présente au moins une liaison simple, double ou triple covalente entre un atome de carbone et un hétéroatome, ou bien un mélange constitué par deux composés de ce type ou plus.

14. Utilisation d'un système de colle selon l'invention, conformément à l'une quelconque des revendications 1 à 8, ou d'une colle préparée conformément à un procédé selon la revendication 9, pour le collage de matériaux constitués de bois, de liège, de métal, de plastique, de pierre ou de béton.
